(19) Europäisches Patentamt
European Patent Office
Office européen des brevets

(11) **EP 4 030 403 A1**

(12) **EUROPEAN PATENT APPLICATION**
published in accordance with Art. 153(4) EPC

(43) Date of publication:
**20.07.2022 Bulletin 2022/29**

(51) International Patent Classification (IPC):
***G08G 1/01*** (2006.01)        ***B60W 40/00*** (2006.01)

(21) Application number: **20923620.7**

(86) International application number:
**PCT/CN2020/077801**

(22) Date of filing: **04.03.2020**

(87) International publication number:
**WO 2021/174445 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen, Guangdong**
**518129 (CN)**

(72) Inventors:
• **LU, Hao**
 **Shenzhen, Guangdong 518129 (CN)**
• **TAO, Yongxiang**
 **Shenzhen, Guangdong 518129 (CN)**
• **DING, Jieyun**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND DEVICE FOR PREDICTING EXIT FOR VEHICLE**

(57)    This application discloses a vehicle driving exit prediction method and apparatus. The vehicle driving exit prediction method and apparatus relate to the field of automatic driving, and are used to predict a driving exit of a target vehicle at a target intersection. The vehicle driving exit prediction method includes: obtaining a first location of the target vehicle at the target intersection and a driving direction of the target vehicle; obtaining N reference points respectively associated with N driving exits of the target intersection, where N is a positive integer; obtaining, based on the first location, the driving direction of the target vehicle, and the N reference points, likelihoods corresponding to the N driving exits respectively, where the likelihood indicates a probability that the target vehicle travels out of the target intersection from a corresponding driving exit; and obtaining a driving exit with a largest likelihood in the N driving exits as the driving exit of the target vehicle.

FIG. 4

EP 4 030 403 A1

**Description**

**TECHNICAL FIELD**

This application relates to the field of automatic driving, and in particular, to a vehicle driving exit prediction method and apparatus.

**BACKGROUND**

In the field of automatic driving, it is very important to predict driving behavior of another vehicle, and in particular, it is crucial to accurately predict driving behavior of another vehicle at an intersection. Because a vehicle flow is complex and a lane identifier is lacked at the intersection, it is very difficult to predict a driving exit to which the another vehicle travels at the intersection.

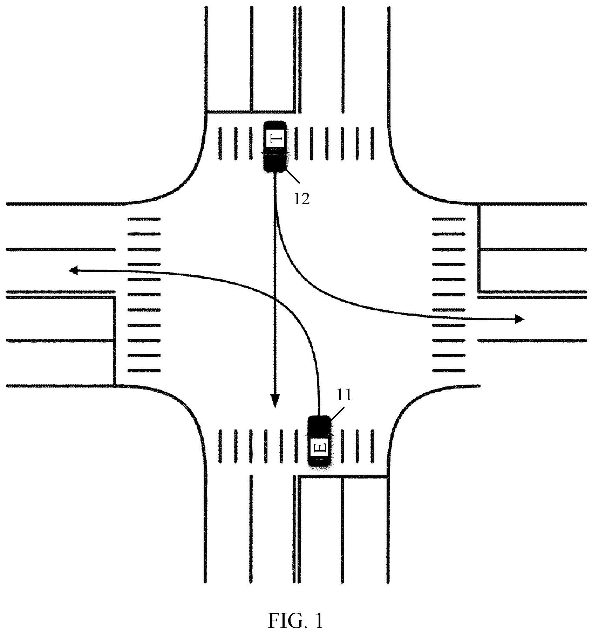

For example, as shown in FIG. 1, it is assumed that a host vehicle 11 turns left at an intersection; and a target vehicle 12 may turn left at the intersection and leave the intersection from a right driving exit, or may go straight and leave the intersection from a lower driving exit. If it is predicted that the target vehicle 12 turns left but the target vehicle actually goes straight, the host vehicle 11 may not decelerate to let a direct-through vehicle go first. As a result, the host vehicle 11 may collide with the target vehicle 12. If it is predicted that the target vehicle goes straight but the target vehicle actually turns left, the host vehicle 11 may decelerate in advance. As a result, traffic efficiency is reduced, and frequent acceleration and deceleration cause poor ride experience.

**SUMMARY**

Embodiments of this application provide a vehicle driving exit prediction method and apparatus, to predict a driving exit of a target vehicle at a target intersection.

To achieve the foregoing objective, the following technical solutions are used in the embodiments of this application.

According to a first aspect, a vehicle driving exit prediction method is provided. The method includes: obtaining a first location of a target vehicle at a target intersection and a driving direction of the target vehicle; obtaining N reference points respectively associated with N driving exits of the target intersection, where N is a positive integer; obtaining, based on the first location, the driving direction of the target vehicle, and the N reference points, likelihoods corresponding to the N driving exits respectively, where the likelihood indicates a probability that the target vehicle travels out of the target intersection from a corresponding driving exit, where for a driving exit K, the driving exit K indicates a K$^{th}$ driving exit in the N driving exits, K is a positive integer less than or equal to N, and a likelihood K corresponding to the driving exit K is obtained in the following method: generating a predicted track K with reference to the driving direction of the target vehicle by using the first location as a start point and a reference point K associated with the driving exit K as an end point; obtaining, based on the first location and a second location, a track point K that is on the predicted track K and that corresponds to the second location, where the second location is a second location of the target vehicle at the target intersection; calculating a distance K between the track point K and the second location; and calculating the likelihood K based on the distance K; and obtaining a driving exit with a largest likelihood in the N driving exits as a driving exit of the target vehicle.

According to the vehicle driving exit prediction method provided in this embodiment of this application, the first location of the target vehicle at the target intersection and the driving direction of the target vehicle are obtained; the N reference points respectively associated with the N driving exits of the target intersection are obtained, where N is a positive integer; the likelihoods corresponding to the N driving exits respectively are obtained based on the first location, the driving direction of the target vehicle, and the N reference points, where the likelihood indicates the probability that the target vehicle travels out of the target intersection from the corresponding driving exit; and the driving exit with the largest likelihood in the N driving exits is obtained as the driving exit of the target vehicle. A likelihood that the target vehicle travels out of each driving exit is calculated to determine that the target vehicle travels out of the driving exit with the largest likelihood. This implements prediction of the driving exit of the target vehicle at the target intersection.

The following provides two manners of calculating the likelihood K.

In a possible implementation, the calculating, based on the distance K, the likelihood K corresponding to the

$$p = \int_{l-\delta}^{l+\delta} \frac{1}{\sqrt{2\pi}\delta} e^{-\frac{(l-\mu)^2}{2\delta^2}} dl$$

driving exit K includes: , where $l$ represents the distance K, $p$ represents the likelihood K, and both $\mu$ and $\delta$ are values obtained by using a statistical method.

In another possible implementation, before the calculating, based on the distance K, the likelihood K corresponding to the driving exit K, the method further includes: calculating an included angle K between a tangent direction of the track point and the driving direction of the target vehicle; and the calculating, based on the distance K, the likelihood K corresponding to the driving exit K includes: calculating, based on the distance K and the included angle K, the likelihood K corresponding to the driving exit K.

The calculating, based on the distance K and the included angle K, the likelihood K corresponding to the driving exit K includes:
$$P^K = \int_{l-\delta_1}^{l+\delta_1} \frac{1}{\sqrt{2\pi}\delta_1} e^{-\frac{(l-\mu_1)^2}{2\delta_1^2}} dl \int_{\theta-\delta_2}^{\theta+\delta_2} \frac{1}{\sqrt{2\pi}\delta_2} e^{-\frac{(\theta-\mu_2)^2}{2\delta_2^2}} d\theta$$
, where $l$ represents the distance K, $\theta$ represents the included angle K, $P^K$ represents the likelihood K, and all $\mu_1$, $\delta_1$, $\mu_2$, and $\delta_2$ are values obtained by using a statistical method.

In a possible implementation, after the calculating, based on the distance K, the likelihood K corresponding to the driving exit K, the method further includes: calculating, based on the likelihood K and historical posterior probabilities corresponding to the N driving exits respectively, a posterior probability K corresponding to the driving exit K, where the historical posterior probability indicates a posterior probability that corresponds to a driving exit and that is obtained through previous calculation; and the obtaining a driving exit corresponding to a largest likelihood in the N driving exits as a driving exit of the target vehicle includes: obtaining a driving exit corresponding to a largest posterior probability in the N driving exits as the driving exit of the target vehicle.

In a possible implementation, the calculating, based on the likelihood K and historical posterior probabilities corresponding to the N driving exits respectively, a posterior probability K corresponding to the driving exit K includes: predicting an intermediate probability K based on the historical posterior probabilities corresponding to the N driving exits respectively; and updating the intermediate probability K based on the likelihood K and an association probability K corresponding to the driving exit K to obtain the posterior probability K.

In a possible implementation, the predicting an intermediate probability K based on the historical posterior probabilities corresponding to the N driving exits respectively includes: $P(\overline{x}_t^K) = \eta \sum_{j=1}^{N} P(x_t^K \mid x_{t-1}^j) P(x_{t-1}^j)$, where $x$ represents an event that the target vehicle selects a driving exit, t represents a moment corresponding to the second location, t-1 represents a moment corresponding to the first location, j represents a $j^{th}$ driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the $j^{th}$ driving exit to t when the target vehicle selects the driving exit K, and $P(x_{t-1}^j)$ represents a posterior probability corresponding to the $j^{th}$ driving exit at t-1 (namely, a historical posterior probability corresponding to the $j^{th}$ driving exit in the N driving exits); and the updating the intermediate probability K based on the likelihood K and an association probability K corresponding to the driving exit K to obtain the posterior probability K includes: $P(x_t^K) = P_t^K P(z_K) P(\overline{x}_t^K)$, where $P(x_t^K)$ represents the posterior probability K, $P_t^K$ represents the likelihood K, $P(z_K)$ represents the association probability K, and $P(\overline{x}_t^K)$ represents the intermediate probability K.

In a possible implementation, before the updating the intermediate probability K based on the likelihood K and an association probability K corresponding to the driving exit K to obtain the posterior probability K, the method further includes: calculating the association probability K by using the following formula: $P(z_K) = \frac{1}{N}$, where $N$ $P(z_K)$ represents the association probability K, and N represents a quantity of the N driving exits.

In a possible implementation, the obtaining N reference points respectively associated with N driving exits of the target intersection includes: obtaining a location point at each of the N driving exits as a reference point associated with the driving exit.

In a possible implementation, the obtaining N reference points respectively associated with N driving exits of the target intersection includes: obtaining N reference lanes from a target driving entrance to the N driving exits, where the target driving entrance is a driving entrance through which the target vehicle travels into the target intersection; and obtaining a location point at each of the N reference lanes as a reference point associated with a driving exit corresponding to the reference lane.

In a possible implementation, the obtaining a location point at each of the N reference lanes as a reference point associated with a driving exit corresponding to the reference lane includes: for any reference lane H in the N reference lanes, obtaining a lane center point sequence H of the reference lane H, and selecting a point in the lane center point sequence H as a reference point associated with a driving exit corresponding to the reference lane H.

In a possible implementation, the obtaining N reference lanes from a target driving entrance to the N driving exits includes: obtaining the N reference lanes from prior reference lanes of map data; or obtaining the N reference lanes based on dynamic reference lanes that are from the target driving entrance to the N driving exits and that are generated based on a vehicle flow at the target intersection; or generating, based on a vehicle flow at the target intersection, dynamic reference lanes from the target driving entrance to the N driving exits, obtaining prior reference lanes of map data, and correcting the prior reference lanes by using the dynamic reference lanes, to obtain the N reference lanes.

In a possible implementation, before the updating the intermediate probability K based on the likelihood K and an association probability K corresponding to the driving exit K to obtain the posterior probability K, the method further includes: obtaining the association probability K based on a transverse distance between the target vehicle and a reference lane K, a relative angle between the target vehicle and the reference lane K, and a distance between the target vehicle and a center point of the target intersection, where the reference lane K is a reference lane from the target entrance to the driving exit K.

In a possible implementation, the obtaining the association probability K based on a transverse distance between the target vehicle and a reference lane K, a relative angle between the target vehicle and the reference lane K, and a distance between the target vehicle and a center point of the target intersection includes: $P(z_K) = f(l, \theta, D)$, where $P(z_K)$ represents the association probability K corresponding to the driving exit K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection. In this embodiment of this application, a calculation method of the function $f$ for calculating an association probability is not limited. For example, the association probability may be obtained in a machine learning method, or may be obtained in a method of assuming that a density function obeys Gaussian distribution.

In a possible implementation, the generating a predicted track K with reference to the driving direction of the target vehicle by using the first location as a start point and a reference point K associated with the driving exit K as an end point includes: generating the predicted track K based on a Bezier curve with reference to the driving direction of the target vehicle by using the first location as a start point and the reference point K associated with the driving exit K as an end point. A manner of drawing the predicted track K is not limited in this application. Alternatively, the predicted track K may be drawn in another manner.

According to a second aspect, a vehicle driving exit prediction apparatus is provided. The apparatus includes: an obtaining module and a calculation module. The obtaining module is configured to obtain a first location of a target vehicle at a target intersection and a driving direction of the target vehicle. The obtaining module is further configured to obtain N reference points respectively associated with N driving exits of the target intersection. N is a positive integer. The obtaining module is further configured to obtain, based on the first location, the driving direction of the target vehicle, and the N reference points, likelihoods corresponding to the N driving exits respectively. The likelihood indicates a probability that the target vehicle travels out of the target intersection from a corresponding driving exit. For a driving exit K, the driving exit K indicates a $K^{th}$ driving exit in the N driving exits, K is a positive integer less than or equal to N, and a likelihood K corresponding to the driving exit K is obtained in the following method: The obtaining module is further configured to generate a predicted track K with reference to the driving direction of the target vehicle by using the first location as a start point and a reference point K associated with the driving exit K as an end point. The obtaining module is further configured to obtain, based on the first location and a second location, a track point K that is on the predicted track K and that corresponds to the second location. The second location is a second location of the target vehicle at the target intersection. The calculation module is configured to calculate a distance K between the track point K and the second location. The calculation module is further configured to calculate, based on the distance K, the likelihood K corresponding to the driving exit K. The obtaining module is further configured to obtain a driving exit corresponding to a largest likelihood in the N driving exits as a driving exit of the target vehicle.

In a possible implementation, that the obtaining module calculates, based on the distance K, the likelihood K corresponding to the driving exit K includes:

$$p = \int_{l-\delta}^{l+\delta} \frac{1}{\sqrt{2\pi}\delta} e^{-\frac{(l-\mu)^2}{2\delta^2}} dl$$

, where $l$ represents the distance K, $p$ represents the likelihood K, and both $\mu$ and $\delta$ are values obtained by using a statistical method.

In a possible implementation, the calculation module is further configured to: before the obtaining module calculates, based on the distance K, the likelihood K corresponding to the driving exit K, calculate an included angle K between a tangent direction of the track point and the driving direction of the target vehicle; and that the obtaining module calculates, based on the distance K, the likelihood K corresponding to the driving exit K includes: calculating, based on the distance K and the included angle K, the likelihood K corresponding to the driving exit K.

In a possible implementation, that the calculation module calculates, based on the distance K and the included angle K, the likelihood K corresponding to the driving exit K includes:

$$P^K = \int_{l-\delta_1}^{l+\delta_1} \frac{1}{\sqrt{2\pi}\delta_1} e^{-\frac{(l-\mu_1)^2}{2\delta_1^2}} dl \int_{\theta-\delta_2}^{\theta+\delta_2} \frac{1}{\sqrt{2\pi}\delta_2} e^{-\frac{(\theta-\mu_2)^2}{2\delta_2^2}} d\theta$$

, where $l$ represents the distance K, $\theta$ represents the included angle K, $P^K$ represents the likelihood K, and all $\mu_1$, $\delta_1$, $\mu_2$, and $\delta_2$ are values obtained by using a statistical method.

In a possible implementation, after calculating, based on the distance K, the likelihood K corresponding to the driving exit K, the calculation module is further configured to calculate, based on the likelihood K and historical posterior probabilities corresponding to the N driving exits respectively, a posterior probability K corresponding to the driving exit K, where the historical posterior probability indicates a posterior probability that corresponds to a driving exit and that is obtained through previous calculation; and that the obtaining module obtains the driving exit corresponding to the largest likelihood in the N driving exits as the driving exit of the target vehicle includes: obtaining a driving exit corresponding to a largest posterior probability in the N driving exits as the driving exit of the target vehicle.

In a possible implementation, that the calculation module calculates, based on the likelihood K and the historical posterior probabilities corresponding to the N driving exits respectively, the posterior probability K corresponding to the driving exit K includes: predicting an intermediate probability K based on the historical posterior probabilities corresponding to the N driving exits respectively; and updating the intermediate probability K based on the likelihood K and an association probability K corresponding to the driving exit K to obtain the posterior probability K.

In a possible implementation, that the calculation module predicts the intermediate probability K based on the historical posterior probabilities corresponding to the N driving exits respectively includes:

$$P(\overline{x}_t^K) = \eta \sum_{j=1}^{N} P(x_t^K \mid x_{t-1}^j) P(x_{t-1}^j)$$

, where $x$ represents an event that the target vehicle selects a driving exit, t represents a moment corresponding to the second location, t-1 represents a moment corresponding to the first location, j represents a $j^{th}$ driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the $j^{th}$ driving exit to t when the target vehicle selects the driving exit K, and $P(x_{t-1}^j)$ represents a posterior probability corresponding to the $j^{th}$ driving exit at t-1; and that the calculation module updates the intermediate probability K based on the likelihood K and the association probability K corresponding to the driving exit K to obtain the posterior probability K includes: $P(x_t^K) = P_t^K P(z_K) P(\overline{x}_t^K)$ where $P(x_t^K)$ represents the posterior probability K, $P_t^K$ represents the likelihood K, $P(z_K)$ represents the association probability K, and $P(\overline{x}_t^K)$ represents the intermediate probability K.

In a possible implementation, before updating the intermediate probability K based on the likelihood K and the association probability K corresponding to the driving exit K to obtain the posterior probability K, the calculation module is further configured to: calculate the association probability K by using the following formula: $P(z_K) = \dfrac{1}{N}$ , where $P(z_K)$ represents the association probability K, and N represents a quantity of the N driving exits.

In a possible implementation, that the obtaining module obtains the N reference points respectively associated with the N driving exits of the target intersection includes: obtaining a location point at each of the N driving exits as a reference point associated with the driving exit.

In a possible implementation, that the obtaining module obtains the N reference points respectively associated with the N driving exits of the target intersection includes: obtaining N reference lanes from a target driving entrance to the N driving exits, where the target driving entrance is a driving entrance through which the target vehicle travels into the target intersection; and obtaining a location point at each of the N reference lanes as a reference point associated with a driving exit corresponding to the reference lane.

In a possible implementation, that the obtaining module obtains the location point at each of the N reference lanes as the reference point associated with the driving exit corresponding to each reference lane includes: for any reference lane H in the N reference lanes, obtaining a lane center point sequence H of the reference lane H, and selecting a point in the lane center point sequence H as a reference point associated with a driving exit corresponding to the reference lane H.

In a possible implementation, that the obtaining module obtains the N reference lanes from the target driving entrance to the N driving exits includes: obtaining the N reference lanes from prior reference lanes of map data; or obtaining the N reference lanes based on dynamic reference lanes that are from the target driving entrance to the N driving exits and that are generated based on a vehicle flow at the target intersection; or generating, based on a vehicle flow at the target intersection, dynamic reference lanes from the target driving entrance to the N driving exits, obtaining prior reference lanes of map data, and correcting the prior reference lanes by using the dynamic reference lanes, to obtain the N reference lanes.

In a possible implementation, before the calculation module updates the intermediate probability K based on the likelihood K and the association probability K corresponding to the driving exit K to obtain the posterior probability K, the obtaining module is further configured to: obtain the association probability K based on a transverse distance between the target vehicle and a reference lane K, a relative angle between the target vehicle and the reference lane K, and a distance between the target vehicle and a center point of the target intersection, where the reference lane K is a reference lane from the target entrance to the driving exit K.

In a possible implementation, that the obtaining module obtains the association probability K based on the transverse distance between the target vehicle and the reference lane K, the relative angle between the target vehicle and the reference lane K, and the distance between the target vehicle and the center point of the target intersection includes: $P(z_K) = f(l,\theta,D)$, where $P(z_K)$ represents the association probability K corresponding to the driving exit K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection.

In a possible implementation, that the obtaining module generates the predicted track K with reference to the driving direction of the target vehicle by using the first location as a start point and the reference point K associated with the driving exit K as an end point includes: generating the predicted track K based on a Bezier curve with reference to the driving direction of the target vehicle by using the first location as a start point and the reference point K associated with the driving exit K as an end point.

According to a third aspect, a vehicle driving exit prediction apparatus is provided. The apparatus includes a processor and a memory. The memory stores computer instructions, and the processor executes the computer instructions to implement the method according to the first aspect and the possible implementations of the first aspect.

According to a fourth aspect, a computer-readable storage medium is provided. The computer-readable storage medium stores computer instructions. When the computer instructions in the computer-readable storage medium are run on a computer or a processor, the computer or the processor is enabled to perform the method according to the first aspect and the possible implementations of the first aspect.

According to a fifth aspect, a computer program product including instructions is provided. When the instructions are run on a computer or a processor, the computer or the processor is enabled to perform the method according to the first aspect and the possible implementations of the first aspect.

For technical effects of the second aspect to the fifth aspect, refer to the content described in the possible implementations of the first aspect.

## BRIEF DESCRIPTION OF DRAWINGS

FIG. 1 is a schematic diagram of a complex traffic situation at a target intersection according to an embodiment of this application;

FIG. 2 is a schematic structural diagram of a vehicle according to an embodiment of this application;

FIG. 3 is a schematic structural diagram of a processor of a vehicle according to an embodiment of this application;

FIG. 4 is a schematic flowchart 1 of a vehicle driving exit prediction method according to an embodiment of this application;

FIG. 5 is a schematic diagram of a reference point at a driving exit according to an embodiment of this application;

FIG. 6 is a schematic flowchart 2 of a vehicle driving exit prediction method according to an embodiment of this application;

FIG. 7 is a schematic diagram of a reference point at a reference lane according to an embodiment of this application;

FIG. 8 is a schematic flowchart 3 of a vehicle driving exit prediction method according to an embodiment of this application;

FIG. 9 is a schematic diagram of displaying a host vehicle and predicted tracks of a target vehicle on a display according to an embodiment of this application;

FIG. 10 is another schematic diagram of displaying a host vehicle and predicted tracks of a target vehicle on a display according to an embodiment of this application;

FIG. 11 is still another schematic diagram of displaying a driving intention of a target vehicle on a display according to an embodiment of this application;

FIG. 12 is yet another schematic diagram of displaying a driving intention of a target vehicle on a display according to an embodiment of this application;

FIG. 13 is a schematic diagram of an error between a predicted track and an actual track according to an embodiment of this application;

FIG. 14 is a schematic diagram of an included angle between a tangent direction of a track point and a driving direction of a target vehicle according to an embodiment of this application;

FIG. 15 is a schematic diagram of a transverse distance between a target vehicle and a reference lane and a relative angle between the target vehicle and the reference lane according to an embodiment of this application;

FIG. 16 is a schematic diagram of a center point of a target intersection according to an embodiment of this application;

FIG. 17 is a schematic diagram of a relatively strict transmit probability according to an embodiment of this application;

FIG. 18 is a schematic diagram of a relatively loose transmit probability according to an embodiment of this application;

FIG. 19 is a schematic diagram of a transmit probability in Gaussian distribution according to an embodiment of this application;

FIG. 20 is a schematic diagram of a vehicle driving exit prediction apparatus according to an embodiment of this application; and

FIG. 21 is a schematic diagram of another vehicle driving exit prediction apparatus according to an embodiment of this application.

## DESCRIPTION OF EMBODIMENTS

Terms such as "component", "module", and "system" used in this application are used to indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. For example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and according to, for example, a signal having one or more data packets (for example, data from one component, where the component interacts with another component in a local system or a distributed system, and/or interacts with other systems via a network such as the internet by using a signal).

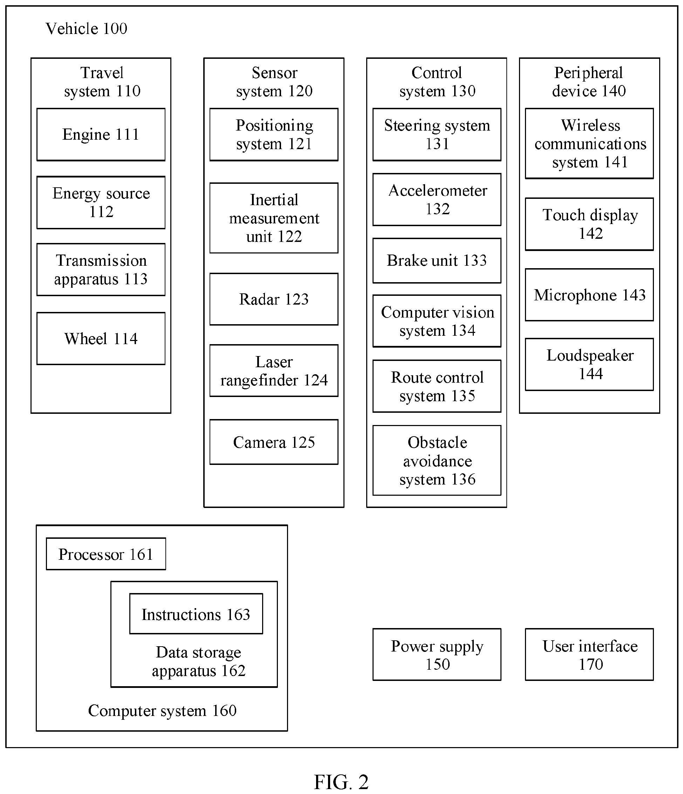

FIG. 2 is a schematic structural diagram of a vehicle according to an embodiment of this application. The vehicle 100 may be configured to be in a full-automatic driving mode, a semi-automatic driving mode, or a manual driving mode.

In the full-automatic driving mode, the vehicle 100 relies on cooperation of artificial intelligence, visual computing, a radar, a monitoring apparatus, and a global positioning system to automatically and safely travel without any active manual operation.

Compared with the full-automatic driving mode, the vehicle 100 in the semi-automatic driving mode needs little manual intervention to automatically and safely travel.

In the manual driving mode, the vehicle 100 may present collected environment information, map information, positioning information, and the like to a driver, so that the driver totally controls driving of the vehicle 100.

The vehicle 100 may include various subsystems, such as a travel system 110, a sensor system 120, a control system 130, one or more peripheral devices 140, a power supply 150, and a computer system 160. Optionally, the vehicle 100 may include more or less subsystems, and each subsystem may include a plurality of elements. In addition, each subsystem and element of the vehicle 100 may be interconnected in a wired or wireless manner.

The travel system 110 may include a component that provides power for the vehicle 100 to move. In an embodiment, the travel system 110 may include an engine 111, an energy source 112, a transmission apparatus 113, and a wheel 114. The engine 111 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 111 converts the energy source 112 into mechanical energy.

Examples of the energy source 112 include gasoline, diesel, other oil-based fuels, propane, other compressed gas-based fuels, ethyl alcohol, solar panels, batteries, and other power sources. The energy source 112 may also provide energy for another system of the vehicle 100.

The transmission apparatus 113 may transmit mechanical power from the engine 111 to the wheel 114. The transmission apparatus 113 may include a gearbox, a differential, and a drive shaft. In an embodiment, the transmission apparatus 113 may further include another component, for example, a clutch. The drive shaft may include one or more shafts that may be coupled to one or more wheels 114.

The sensor system 120 may include several sensors that sense information about an ambient environment of the vehicle 100. For example, the sensor system 120 may include a positioning system 121 (for example, a global positioning system (global positioning system, GPS) system, a BeiDou system, or another positioning system), an inertial measurement unit (inertial measurement unit, IMU) 122, a radar 123, a laser rangefinder 124, and a camera 125. The sensor system 120 may further include sensors monitoring (for example, an in-vehicle air quality monitor, a fuel gauge, and an oil temperature gauge) an internal system of the vehicle 100. One or more pieces of sensor data from these sensors can be used to detect objects and corresponding features (a location, a shape, a direction, a speed, and the like) of the objects. Such detection and recognition are key functions of security operations of the vehicle 100.

The positioning system 121 may be configured to estimate a geographical location of the vehicle 100.

The IMU 122 is configured to sense changes of a location and a driving direction of the vehicle 100 based on inertial acceleration. In an embodiment, the IMU 122 may be a combination of an accelerometer and a gyroscope.

The radar 123 may sense an object in the ambient environment of the vehicle 100 by using a radio signal. In some embodiments, in addition to sensing an object, the radar 123 can be further configured to sense a speed and/or a driving direction of the object.

The laser rangefinder 124 may sense, by using a laser, an object in an environment in which the vehicle 100 is located. In some embodiments, the laser rangefinder 124 may include one or more laser sources, a laser scanner, one or more detectors, and another system component.

The camera 125 may be configured to capture a plurality of images of the ambient environment of the vehicle 100. The camera 125 may be a static camera or a video camera.

The control system 130 may control operations of the vehicle 100 and components of the vehicle 100. The control system 130 may include a steering system 131, an accelerator 132, a brake unit 133, a computer vision system 134, a route control system 135, and an obstacle avoidance system 136.

The steering system 131 may operate to adjust a driving direction of the vehicle 100. In an embodiment, the steering system 131 may be a steering wheel system.

The accelerator 132 is configured to control a rotational speed of the engine 111 and further control a speed of the vehicle 100.

The brake unit 133 is configured to control the vehicle 100 to decelerate. The brake unit 133 may use friction to reduce a rotational speed of the wheel 114. In another embodiment, the brake unit 133 may convert kinetic energy of the wheel 114 into a current. The brake unit 133 may alternatively use another form to reduce the rotational speed of the wheel 114, to control the speed of the vehicle 100.

The computer vision system 134 may process and analyze an image captured by the camera 125 to identify objects and/or features in the ambient environment of the vehicle 100. The objects and/or features may include traffic signals, road boundaries, and obstacles. The computer vision system 134 may use an object recognition algorithm, a structure from motion (structure from motion, SFM) algorithm, video tracking, and another computer vision technology. In some embodiments, the computer vision system 134 may be configured to: draw a map for an environment, track an object, estimate a speed of the object, and the like.

The route control system 135 is configured to determine a driving route of the vehicle 100. In some embodiments, the route control system 135 may determine the driving route for the vehicle 100 in combination with a sensor, the positioning system 121, and one or more pieces of map data.

The obstacle avoidance system 136 is configured to identify, evaluate, and avoid or otherwise bypass a potential obstacle in an environment of the vehicle 100.

Certainly, in an embodiment, the control system 130 may add or alternatively include components other than those shown and described. Alternatively, the control system 130 may delete some of the components shown above.

The vehicle 100 interacts with an external sensor, another vehicle, another computer system, or a user by using the peripheral device 140. The peripheral device 140 may include a wireless communications system 141, a touch display 142, a microphone 143, and a loudspeaker 144.

In some embodiments, the peripheral device 140 (for example, the touch display 142, the microphone 143, and the loudspeaker 144) may provide a means for interaction between the user and the vehicle 100. For example, the touch display 142 may display vehicle information, environment information, a map, and the like to the user, and may further receive instructions from the user. The microphone 143 may receive audio of the user, for example, a voice control command, call content, or other audio input. The loudspeaker 144 may output audio to the user.

The peripheral device 140 (for example, the wireless communications system 141) may further provide a means of communication between the vehicle 100 and another communications device. For example, the wireless communications system 141 may communicate with the another communications device by using a 3rd generation (3rd generation, 3G) mobile communications technology, a 4th generation (4th generation, 4G) mobile communications technology, or a 5th generation (5th generation, 5G) mobile communications technology, for example, code division multiple access (code division multiple access, CDMA), a global system for mobile communications (global system for mobile communications, GSM), a general radio packet service (general packet radio service, GPRS), long term evolution (long term evolution, LTE), and the internet of things (the internet of things, IOT).

The wireless communications system 141 may further communicate with a wireless local area network (wireless local area network, WLAN) by using wireless fidelity (wireless fidelity, Wi-Fi), and directly communicate with another communications device by using an infrared link, Bluetooth, ZigBee, or another wireless communications protocol.

The power supply 150 may supply power to various components of the vehicle 100. For example, the power supply 150 may be one or more rechargeable lithium-ion or lead-acid batteries. For example, in an all-electric vehicle, the power supply 150 and the energy source 112 may be designed as a whole.

Some or all functions of the vehicle 100 are controlled by the computer system 160. The computer system 160 may include at least one processor 161 and a data storage apparatus 162. The data storage apparatus 162 may include instructions 163 (for example, program logic) and data.

The processor 161 may execute the instructions 163 stored in a computer-readable storage medium such as the data storage apparatus 162, and process the data. The processor 161 may be any conventional processor, such as a commercially available central processing unit (central processing unit, CPU). Alternatively, the processor may be a dedicated device such as an application-specific integrated circuit (application specific integrated circuit, ASIC) or another hardware-based processor. Although FIG. 2 functionally illustrates the processor, the memory, and other elements in the same physical housing, a person of ordinary skill in the art should understand that the processor, the computer system, or the memory may actually include a plurality of processors, computer systems, or memories that may be stored in the same physical housing, or may include a plurality of processors, computer systems, or memories that may not be stored within the same physical housing. For example, the memory may be a hard disk drive or another storage medium located in a housing different from the physical housing. Therefore, a reference to the processor or the computer system is understood to include a reference to a set of processors, computer systems, or memories that may be operated in parallel, or a reference to a set of processors, computer systems, or memories that may not be operated in parallel. Different from using a single processor to perform the steps described herein, some components such as a steering component and a deceleration component each may include a respective processor. The processor performs only computation related to a component-specific function.

In various aspects described herein, the processor may be located far away from the vehicle and perform wireless communication with the vehicle. In other aspects, some of the processes described herein are performed on the processor disposed inside the vehicle, while others are performed by a remote processor. The processes include necessary steps for performing a single operation.

The instructions 163 may be executed by the processor 161 to perform various functions of the vehicle 100. The data storage apparatus 162 may also include additional instructions, including instructions to send data to, receive data from, interact with, and/or control one or more of the travel system 110, the sensor system 120, the control system 130, and the peripheral device 140.

In addition to the instructions 163, the data storage apparatus 162 may further store data, such as a road map, route information, and a location, a direction, a speed, and other data of the vehicle. The data may be used by the computer system 160 in the full-automatic driving mode, the semi-automatic driving mode, or the manual driving mode of the vehicle 100.

For example, in this embodiment of this application, the data storage apparatus 162 obtains environment information from the sensor system 120 or another component of the vehicle 100. The environment information may be, for example, whether there is a green belt, a lane, or a pedestrian near the environment in which the vehicle is currently located. For example, the vehicle calculates, by using a machine learning algorithm, whether there is the green belt, the pedestrian, or the like near the current environment. The data storage apparatus 162 may further store status information of the vehicle and status information of another vehicle that interacts with the vehicle. The status information includes but is not limited to a speed, acceleration, a heading angle, and the like of the vehicle. For example, the vehicle obtains a distance between the another vehicle and the vehicle, a speed of the another vehicle, and the like based on a speed measurement function and a distance measurement function of the radar 123. In this way, the processor 161 may obtain the information from the data storage apparatus 162, and obtain a final driving policy based on the environment information of the environment in which the vehicle is located, the status information of the vehicle, the status information of the another vehicle, and a conventional rule-based driving policy, to control the vehicle to perform automatic driving.

A user interface 170 is configured to provide information for or receive information from the user of the vehicle 100. Optionally, the user interface 170 may include one or more input/output devices in a set of the peripheral devices 140, for example, one or more of the wireless communications system 141, the touch display 142, the microphone 143, and the loudspeaker 144.

The computer system 160 may control the functions of the vehicle 100 based on input received from various subsystems (for example, the travel system 110, the sensor system 120, and the control system 130) and from the user interface 170. For example, the computer system 160 may utilize input from the control system 130 to control the steering system 131, to avoid obstacles detected by the sensor system 120 and the obstacle avoidance system 136. In some embodiments, the computer system 160 may operate to provide control over many aspects of the vehicle 100 and the subsystems of the vehicle 100.

Optionally, one or more of the foregoing components may be installed separately from or associated with the vehicle 100. For example, the data storage apparatus 162 may be partially or totally separated from the vehicle 100.

The foregoing components may be communicatively coupled together in a wired and/or wireless manner.

Optionally, the foregoing components are merely examples. In actual application, components in the foregoing modules may be added or deleted based on an actual requirement. FIG. 2 should not be understood as a limitation on this embodiment of this application.

An automatic driving car driving on a road, such as the vehicle 100, may recognize an object in the ambient environment of the vehicle 100 to determine adjustment on a current speed. The object may be the another vehicle, a traffic control device, or another type of object. In some examples, each recognized object may be considered independently and may be used to determine the speed to be adjusted by the automatic driving car, based on features of each object, such as a current speed of the object, acceleration of the object, or a spacing between the object and the car.

Optionally, the automatic driving car vehicle 100 or a computing device associated with the automatic driving vehicle 100 (the computer system 160, the computer vision system 134, the data storage apparatus 162 in FIG. 2) may be based on the feature of the identified object and the status of the ambient environment (for example, traffic, rain, ice on a road, and the like) to predict behavior of the identified object. Optionally, recognized objects depend on behavior of each other. Therefore, all recognized objects may be considered together to predict behavior of a single recognized object. The vehicle 100 can adjust the speed and the direction of the vehicle 100 based on the predicted behavior of the recognized object. In other words, the automatic driving car can determine, based on the predicted behavior of the object, a stable state to which the vehicle needs to be adjusted, for example, acceleration, deceleration, steering, or stop. In this process, other factors, for example, a transverse location of the vehicle 100 on a driving road, a curvature of the road, and proximity of a static object and a dynamic object, may also be considered to determine the speed and the direction of the vehicle 100.

In addition to providing an instruction for adjusting the speed of the automatic driving car, the computing device may further provide an instruction for modifying a steering angle of the vehicle 100, so that the automatic driving car can follow a given track and/or maintain a safe horizontal distance and a safe vertical distance from an object (for example, a car on a neighboring lane of the road) near the automatic driving car.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

In some other embodiments of this application, the vehicle may further include a hardware structure and/or a software module, and implement the functions in a form of the hardware structure, the software module, or both the hardware structure and the software module. Whether a function in the foregoing functions is performed in the form of the hardware structure, the software module, or both the hardware structure and the software module depends on specific applications and design constraint conditions of the technical solutions.

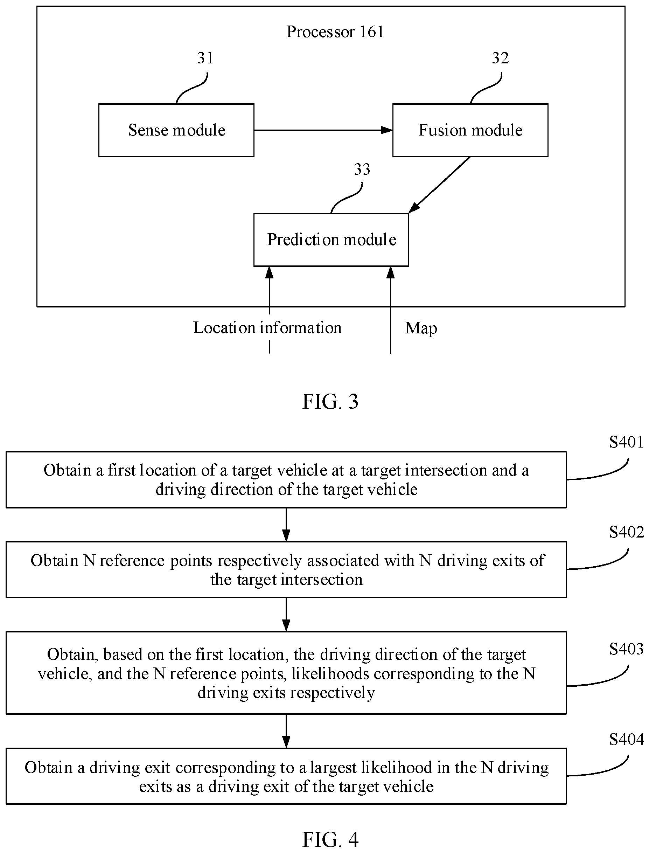

As shown in FIG. 3, the processor 161 of the vehicle 100 may include the following modules:

    a sense module 31, configured to process various original data (for example, an original video stream and point cloud data) received by an in-vehicle sensor (for example, the radar 123, the laser rangefinder 124, and the camera 125 described above), for example, functions such as perform lane line recognition to obtain lane line information, perform traffic sign recognition to obtain a traffic sign, and perform obstacle recognition to obtain an obstacle list;

    a fusion module 32, configured to perform smoothing processing on a processing result (for example, the lane line information, the traffic sign, and the obstacle list) of the sense module 31, and output structured road feature data, for example, a drivable area, and a type, a location, and a speed of an obstacle; and

    a prediction module 33, configured to perform, based on the positioning information of the vehicle, the map, and a processing result of the fusion module 32, a vehicle driving exit prediction method provided in an embodiment of this application, to predict a driving exit selected by a target vehicle at a target intersection.

As shown in FIG. 4, a vehicle driving exit prediction method provided in an embodiment of this application includes S401 to S404.

S401: Obtain a first location of a target vehicle at a target intersection and a driving direction of the target vehicle.

The target intersection in this embodiment of this application is a place at which at least two roads converge, and includes but is not limited to a crossroad, a T-shaped intersection, a ✳-shaped intersection, a roundabout, and various irregular intersections.

The target intersection in this embodiment of this application includes a driving exit and a driving entrance. The driving exit is an area in which a vehicle flow or a pedestrian flow leaves the target intersection. The driving entrance is an area in which a vehicle flow or a pedestrian flow enters the target intersection. It may be determined that the target vehicle travels towards a driving entrance means wrong-way driving of the target vehicle, and that the target vehicle travels towards a driving exit means normal driving of the target vehicle.

A location (x, y) of the target vehicle may be an absolute location, for example, a longitude and latitude location, or may be a relative location of the target vehicle on a map. The driving direction $\theta$ of the target vehicle may be a relative angle of the driving direction of the target vehicle relative to a direction (for example, the north), or may be a relative angle of the driving direction of the target vehicle relative to that of a host vehicle.

S402: Obtain N reference points respectively associated with N driving exits of the target intersection.

Herein, N is a positive integer.

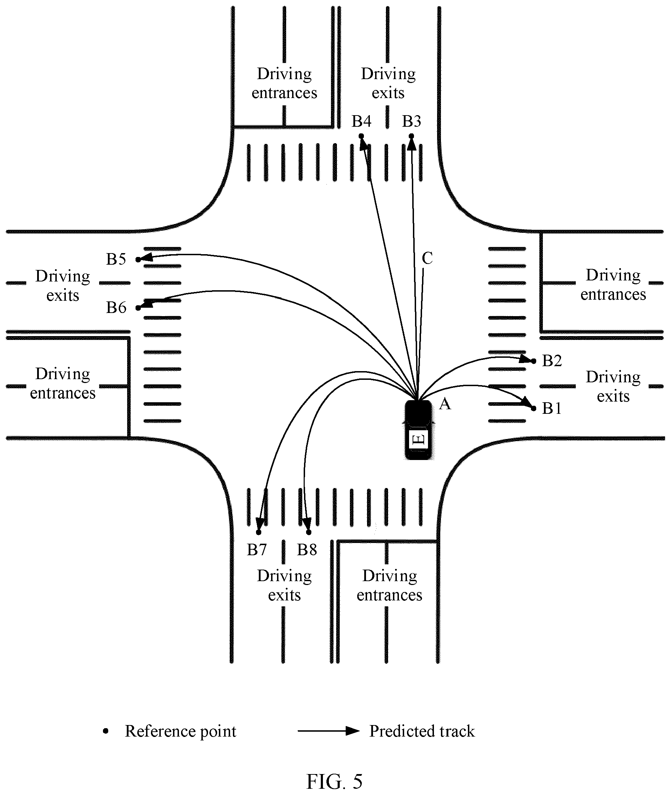

In a possible implementation, for example, as shown by solid points B1 to B8 in FIG. 5, a location point at each of the N driving exits may be obtained as a reference point associated with the driving exit. For example, a midpoint of each driving exit may be used as the reference point associated with the driving exit.

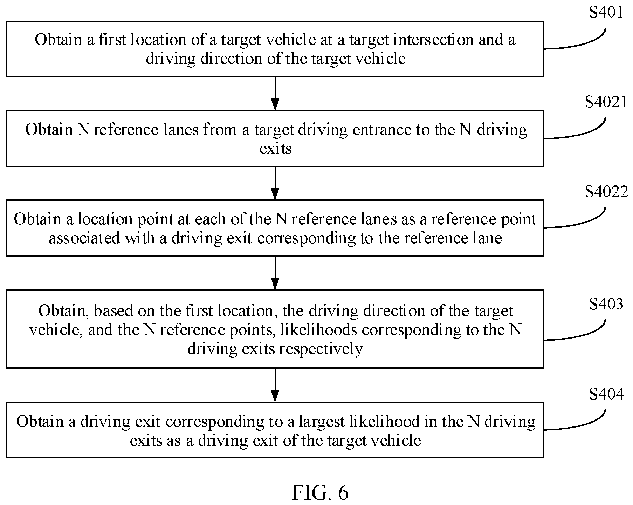

In another possible implementation, as shown in FIG. 6, step S402 includes S4021 and S4022.

S4021: Obtain N reference lanes from a target driving entrance to the N driving exits.

The target driving entrance is a driving entrance through which the target vehicle travels into the target intersection. The reference lane is a lane that is not drawn on a real road but has a function of limiting a driving range.

In a possible implementation, the N reference lanes may be obtained from prior reference lanes of map data.

Alternatively, in another possible implementation, the N reference lanes may be obtained based on dynamic reference lanes that are from the target driving entrance to the N driving exits and that are generated based on a vehicle flow at the target intersection.

Moving tracks of other vehicles that enter the target intersection from a same driving entrance and leave the target intersection from a same driving exit may be fitted to obtain a reference lane.

Specifically, whether there are moving vehicles at the target intersection are first determined. If there are the moving vehicles, relative coordinates of each vehicle relative to the host vehicle are converted into absolute coordinates relative to the ground, the absolute coordinates are projected onto the map, and a moving track of each vehicle on the map is recorded.

Location coordinates of each driving entrance and location coordinates of each driving exit of the target intersection on the map are determined, moving tracks of vehicles that enter a road from a same driving entrance and leave the road from a same driving exit are grouped, and moving tracks of a same group are fitted to obtain a reference lane.

Specifically, the moving tracks of the same group may be fitted based on a polynomial function to obtain one reference lane.

It is assumed that a set of sampling points on the moving tracks of the same group is $(x_1, y_1), (x_2, y_2), \cdots (x_n, y_n)$, and a polynomial fitting function is defined as follows:

$$ f(x) = w_0 + w_1 x + w_2 x^2 + \cdots + w_n x^n = \sum_{i=0}^{n} w_i x_i \quad \text{Formula 1} $$

Herein, $w_1$, $w_2 \cdots w_n$ are polynomial coefficients, and $n$ is a polynomial order.

A value of a polynomial coefficient is determined by using a regularized least square method. In other words, one group $W(w_0, w_1 \cdots w_n)$ is found to minimize a value of $\frac{1}{2}\sum_{i}(f(x_i) - y_i)^2 + \frac{\lambda}{2}\|W\|^2$, in other words, to resolve

$\min_{w} \frac{1}{2}\sum_{i}(f(x_i) - y_i)^2 + \frac{\lambda}{2}\|W\|^2$, where $\|W\|^2 = w_0^2 + w_1^2 + w_2^2 + \cdots + w_n^2$ is a penalty term added to prevent overfitting.

Alternatively, in another possible implementation, dynamic reference lanes from the target driving entrance to the N driving exits are generated based on a vehicle flow at the target intersection (for details, refer to the foregoing descriptions), prior reference lanes of map data are obtained, and the prior reference lanes are corrected by using the dynamic reference lanes, to obtain the N reference lanes. For example, the dynamic reference lanes and the prior reference lanes may be averaged, or the generated dynamic reference lanes are directly replaced with pre-stored prior reference lanes.

S4022: Obtain a location point at each of the N reference lanes as a reference point associated with a driving exit corresponding to the reference lane.

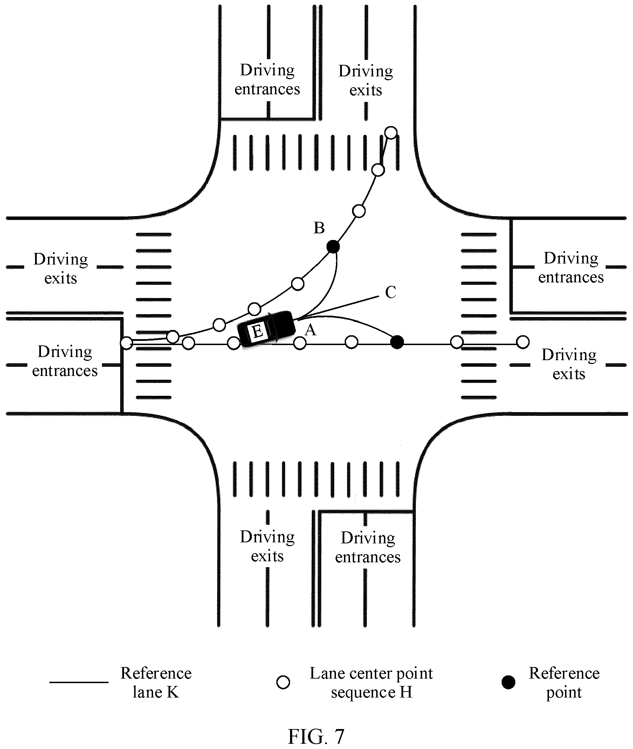

Specifically, as shown in FIG. 7, for any reference lane H in the N reference lanes, a lane center point sequence H of the reference lane H is obtained, and a point in the lane center point sequence H is selected as a reference point associated with a driving exit corresponding to the reference lane H.

S403: Obtain, based on the first location, the driving direction of the target vehicle, and the N reference points, likelihoods corresponding to the N driving exits respectively.

The likelihood indicates a probability that the target vehicle travels out of the target intersection from a corresponding driving exit.

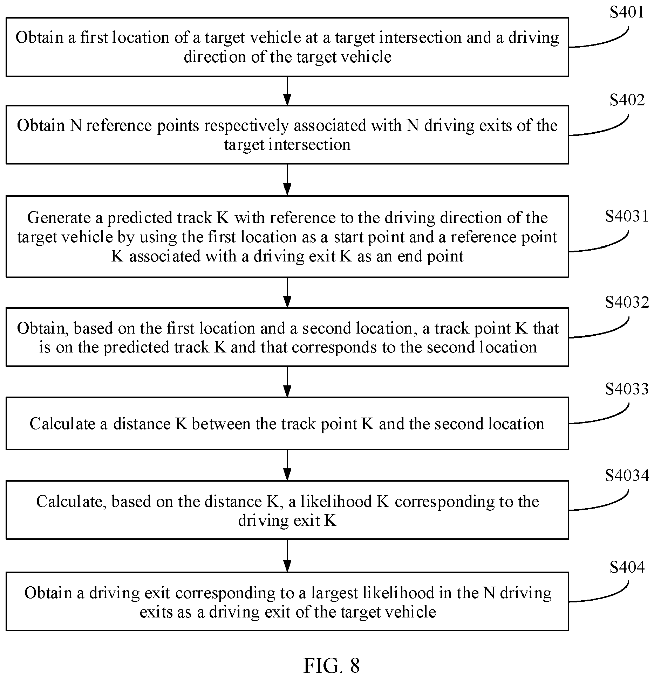

As shown in FIG. 8, for a driving exit K, the driving exit K indicates a $K^{th}$ driving exit in the N driving exits, K is a positive integer less than or equal to N, and a likelihood K corresponding to the driving exit K is obtained in the following method.

S4031: Generate a predicted track K with reference to the driving direction of the target vehicle by using the first location as a start point and a reference point K associated with the driving exit K as an end point.

In a possible implementation, the predicted track K may be generated based on a Bezier curve (Bezier curve) with reference to the driving direction of the target vehicle by using the first location as a start point and the reference point K associated with the driving exit K as an end point. A manner of drawing the predicted track K is not limited in this application. Alternatively, the predicted track K may be drawn in another manner.

For example, as shown in FIG. 5 and FIG. 7, the predicted track K may be drawn by using a secondorder Bezier curve, where A is a start point, B is an end point, C is a control point, a straight line between the control point C and the start point A is a control line, and the driving direction of the target vehicle is a direction from the start point A to the control point C.

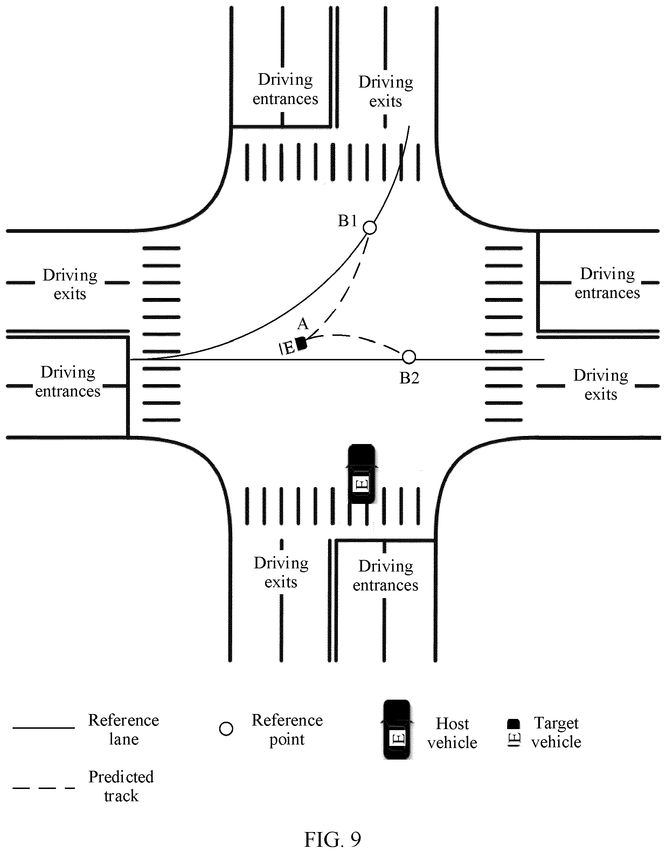

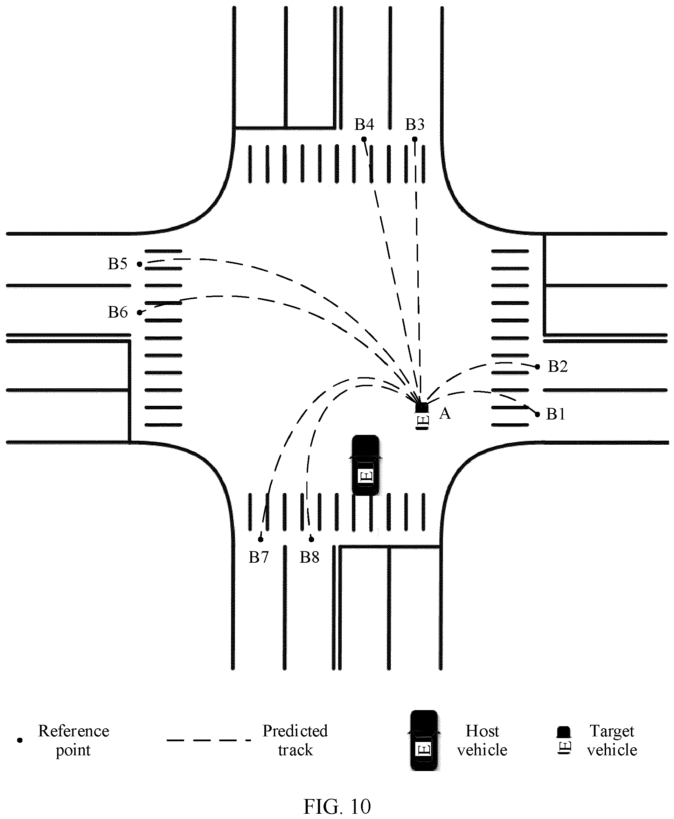

As shown in FIG. 9 and FIG. 10, a virtual target intersection image may be displayed on a display. For example, a plane sketch of the target intersection obtained from the map is displayed. Location information of the host vehicle is obtained by using a positioning system, and is converted into location coordinates of the host vehicle in the image, to display the host vehicle in a virtual graph. A distance and an angle of the target vehicle (for example, another vehicle) relative to the host vehicle are collected by using a radar, a laser rangefinder, or the like, and are converted into location coordinates of the target vehicle in the image, to display the target vehicle in a virtual graph. A manner of displaying the host vehicle and a manner of displaying the target vehicle may be different for ease of distinguishing. For example, the graph of the host vehicle may be greater than the graph of the target vehicle, or a color of the graph of the host vehicle is different from a color of the graph of the target vehicle. This is not limited in this application.

A reference point at the target intersection may be displayed on the display, a reference lane may be displayed on the display, and a predicted track of the target vehicle may be further displayed on the display.

FIG. 9 shows predicted tracks drawn by using the first location of the target vehicle as a start point A and reference points in lane center point sequences of reference lanes as end points (for example, B1 and B2). FIG. 10 shows predicted tracks drawn by using the first location of the target vehicle as a start point A and location points at driving exits (for example, B1 to B8) as end points.

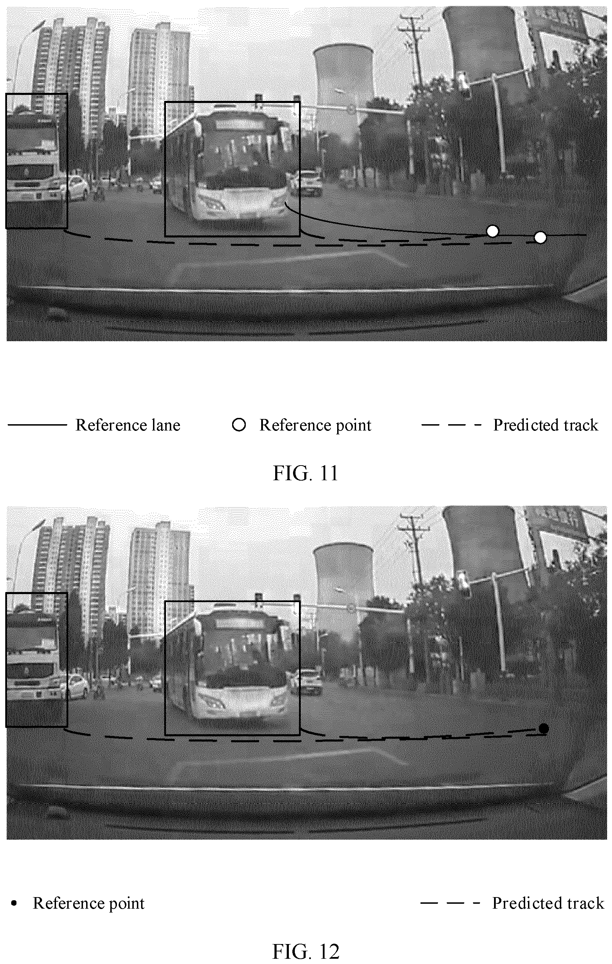

As shown in FIG. 11 and FIG. 12, a real target intersection image may also be displayed on the display. In FIG. 11, a location point on a reference lane is used as a reference point associated with a driving exit corresponding to the reference lane. In FIG. 12, a location point at each driving exit is used as a reference point associated with the driving exit. For example, a real-time target intersection image is captured by using a camera, a target detection technology or a target recognition technology is used to detect a target vehicle in the image, and annotation information of the target vehicle is displayed in the image. For example, the target vehicle in the image is annotated by using a box, an arrow, or the like.

Likewise, a reference point (for example, a point at a driving entrance or exit) at the target intersection may be displayed on the display, a reference lane may be displayed on the display, and a predicted track of the target vehicle may be further displayed on the display. For example, FIG. 11 shows a predicted track drawn by using a location of the target vehicle at a first moment as a start point and a point that is on a reference lane and that is in a range of an included angle with the driving direction of the target vehicle as an end point.

It should be noted that, regardless of which display manner is used, only a reference lane or a point at a driving entrance or exit that is associated with the target vehicle may be displayed, and there is no need to display all reference lanes or points at the driving entrance or exit. Therefore, when there are a relatively small quantity of vehicles at the target intersection, the display is more concise and clear.

S4032: Obtain, based on the first location and a second location, a track point K that is on the predicted track K and that corresponds to the second location.

The second location is a second location of the target vehicle at the target intersection.

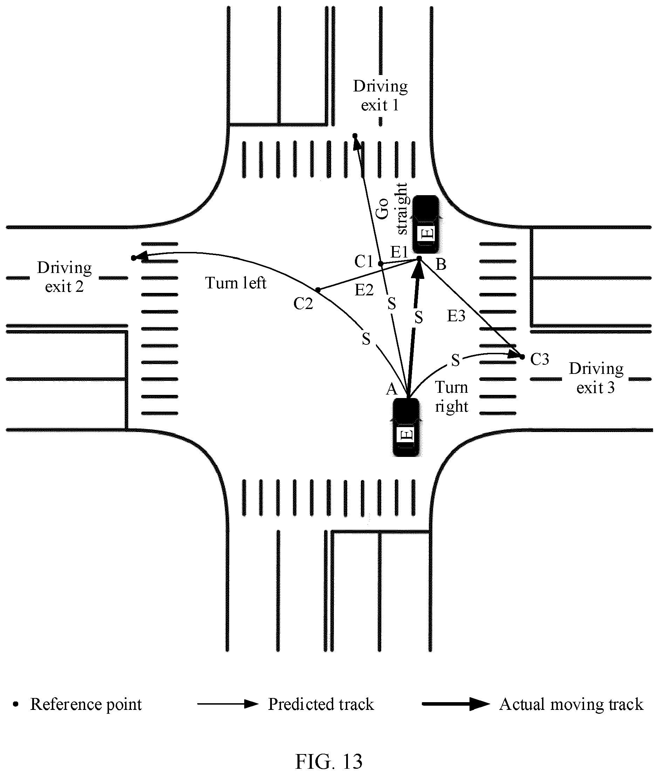

For example, as shown in FIG. 13, the target vehicle is located at a first location A at a first moment, the target vehicle is located at a second location B at a second moment, and a track along which the target vehicle moves from the first location A to the second location B is an actual track.

For example, there are three predicted tracks and one actual track, and a common start point of the actual track and the predicted tracks is the first location A of the target vehicle. A first distance S that the target vehicle moves from the first location A to the second location B on the actual track is calculated. Points that start to move from the common start point A along the predicted tracks K by the first distance S are determined as track points K (for example, C1, C2, and C3).

S4033: Calculate a distance K between the track point K and the second location.

For example, as shown in FIG. 13, a distance between the track point C1 and the second location B represents an error E1 between a predicted track from A to C1 and the actual track from A to B, a distance between the track point C2 and the second location B represents an error E2 between a predicted track from A to C1 and the actual track from A to B, and a distance between the track point C3 and the second location B represents an error E3 between a predicted track from A to C1 and the actual track from A to B.

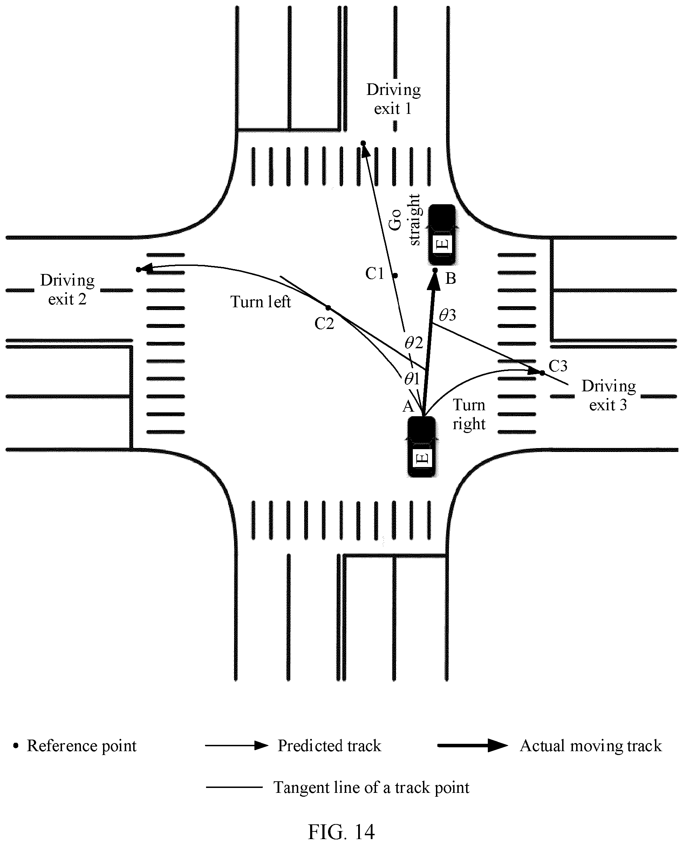

Optionally, an included angle K between a tangent direction of the track point and the driving direction of the target vehicle may be further calculated. For example, as shown in FIG. 14, an included angle between a tangent direction of the track point C1 and the driving direction of the target vehicle is $\theta1$, an included angle between a tangent direction of the track point C2 and the driving direction of the target vehicle is $\theta2$, and an included angle between a tangent direction of the track point C3 and the driving direction of the target vehicle is $\theta3$.

S4034: Calculate, based on the distance K, the likelihood K corresponding to the driving exit K.

In a possible implementation, if a driving intention of the target vehicle is a specific manner, for example, U-turn, going straight, turning left, or turning right, an error E (that is, the distance K between the track point K and the second location) between the actual track of the target vehicle and the predicted track of the driving intention complies with Gaussian distribution. Therefore, the likelihood K corresponding to the driving exit K is:

$$p = \int_{l-\delta}^{l+\delta} \frac{1}{\sqrt{2\pi}\delta} e^{-\frac{(l-\mu)^2}{2\delta^2}} \, dl \quad \text{Formula 2}$$

$l$ represents the distance K between the track point K and the second location, $p$ represents the likelihood K, and both $\mu$ and $\delta$ are values obtained by using a statistical method. For example, statistics on $\mu$ and $\delta$ may be collected offline. Predicted tracks and actual tracks of all vehicles that pass through the target intersection within a period of time may be obtained in advance, to obtain distances between track points corresponding to the vehicles and second locations. An average value $\mu$ of the distances corresponding to the vehicles is obtained, and a variance $\delta$ of the distances corresponding to the vehicles is obtained.

In another possible implementation, the likelihood K corresponding to the driving exit K may be calculated based on the distance K between the track point K and the second location and the included angle K between the tangent direction of the track point and the driving direction of the target vehicle:

$$P^K = \int_{l-\delta_1}^{l+\delta_1} \frac{1}{\sqrt{2\pi}\delta_1} e^{-\frac{(l-\mu_1)^2}{2\delta_1^2}} \, dl \int_{\theta-\delta_2}^{\theta+\delta_2} \frac{1}{\sqrt{2\pi}\delta_2} e^{-\frac{(\theta-\mu_2)^2}{2\delta_2^2}} \, d\theta \quad \text{Formula 3}$$

$l$ represents the distance K between the track point K and the second location, $\theta$ represents the included angle K, $P^K$ represents the likelihood K corresponding to the driving exit K, and all $\mu_1$, $\delta_1$, $\mu_2$, and $\delta_2$ are values obtained by using a statistical method. For example, statistics on $\mu_1$, $\delta_1$, $\mu_2$, and $\delta_2$ may be collected offline. Predicted tracks and actual tracks of all vehicles that pass through the target intersection within a period of time may be obtained in advance, to obtain distances between track points corresponding to the vehicles and second locations, and included angles between tangent directions of the track points and the driving direction of the target vehicle. An average value $\mu_1$ of the distances corresponding to the vehicles is obtained, a variance $\delta_1$ of the distances corresponding to the vehicles is obtained, an average value $\mu_2$ of the angles corresponding to the vehicles is obtained, and a variance $\delta_2$ of the angles corresponding to the vehicles is obtained.

Optionally, a posterior probability K corresponding to the driving exit K may also be calculated based on the likelihood K corresponding to the driving exit K and historical posterior probabilities K corresponding to the N driving exits respectively.

The historical posterior probability indicates a posterior probability that corresponds to a driving exit and that is obtained through previous calculation.

According to the Bayes theorem, Posterior probability = Conditional probability x Prior probability.

First, an intermediate probability K may be predicted based on the historical posterior probabilities corresponding to the N driving exits respectively.

$$P(\overline{x}_t^K) = \eta \sum_{j=1}^{N} P(x_t^K \mid x_{t-1}^j) P(x_{t-1}^j) \quad \text{Formula 4}$$

$x$ represents an event that the target vehicle selects a driving exit, t represents a moment corresponding to the second location, t-1 represents a moment corresponding to the first location, j represents a jth driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the jth driving exit to t when the target vehicle selects the driving exit K, and $P(x_{t-1}^j)$ represents a posterior probability corresponding to the jth driving exit at t-1 (namely, a historical posterior probability corresponding to the jth driving exit in the N driving exits).

Then, the intermediate probability K may be updated based on the likelihood K corresponding to the driving exit K and an association probability K corresponding to the driving exit K to obtain the posterior probability K corresponding to the driving exit K.

$$P(x_t^K) = P_t^K P(z_K) P(\overline{x}_t^K) \quad \text{Formula 5}$$

$P(x_t^K)$ represents the posterior probability K corresponding to the driving exit K, $P_t^K$ represents the likelihood K corresponding to the driving exit K, $P(z_K)$ represents the association probability K corresponding to the driving exit K, and $P(\overline{x}_t^K)$ represents the intermediate probability K corresponding to the driving exit K.

The following describes how to calculate the association probability K corresponding to the driving exit K.

In a possible implementation, when the location point at each of the N driving exits is obtained as the reference point associated with the driving exit, the association probability corresponding to the driving exit K is:

$$P(z_K) = \frac{1}{N} \quad \text{Formula 6}$$

$P(z_K)$ represents the association probability K corresponding to the driving exit K, and N represents a quantity of N driving exits.

In another possible implementation, when the location point at each of the N reference lanes is obtained as the reference point associated with a driving exit corresponding to the reference lane, the association probability K may be obtained based on a transverse distance between the target vehicle and a reference lane K, a relative angle between the target vehicle and the reference lane K, and a distance between the target vehicle and a center point of the target intersection.

The reference lane K is a reference lane from the target driving entrance to the driving exit K. A location (x, y) of the target vehicle and the driving direction $\theta$ of the target vehicle may be converted from global coordinates to lane coordinates, to obtain the transverse distance *l* between the target vehicle and the reference lane and the relative angle $\theta$ between the target vehicle and the reference lane.

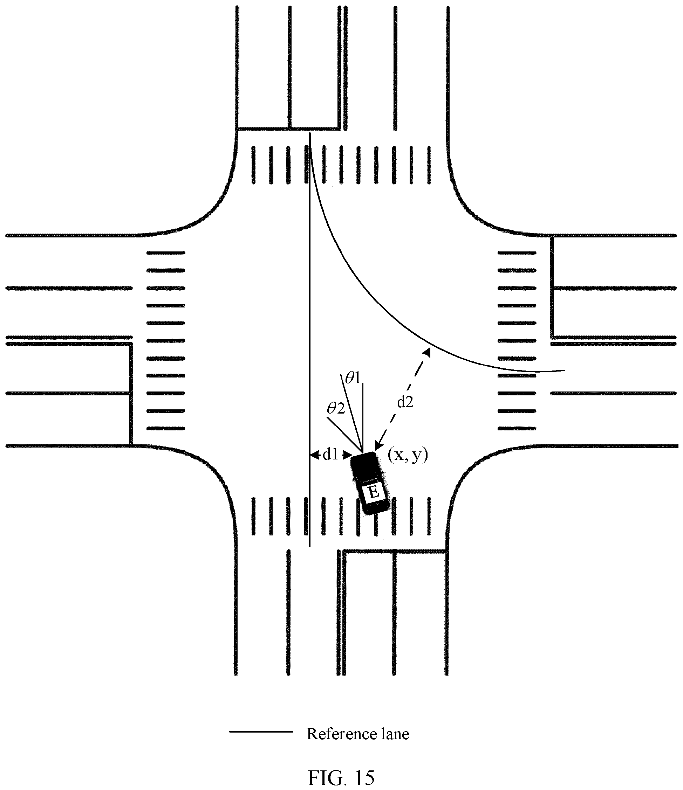

For example, as shown in FIG. 15, a transverse distance between the target vehicle and a reference lane 1 is *l*1, and a relative angle between the target vehicle and the reference lane 1 is $\theta$1; and a transverse distance between the target vehicle and a reference lane 2 is *l*2, and a relative angle between the target vehicle and the reference lane 2 is $\theta$2.

The center point of the target intersection is a geometric center point of the target intersection. Specifically, a boundary of the target intersection may be determined based on a map, the center point C of the target intersection is calculated based on the boundary of the target intersection, and then the distance D between the target vehicle and the center point of the target intersection is calculated.

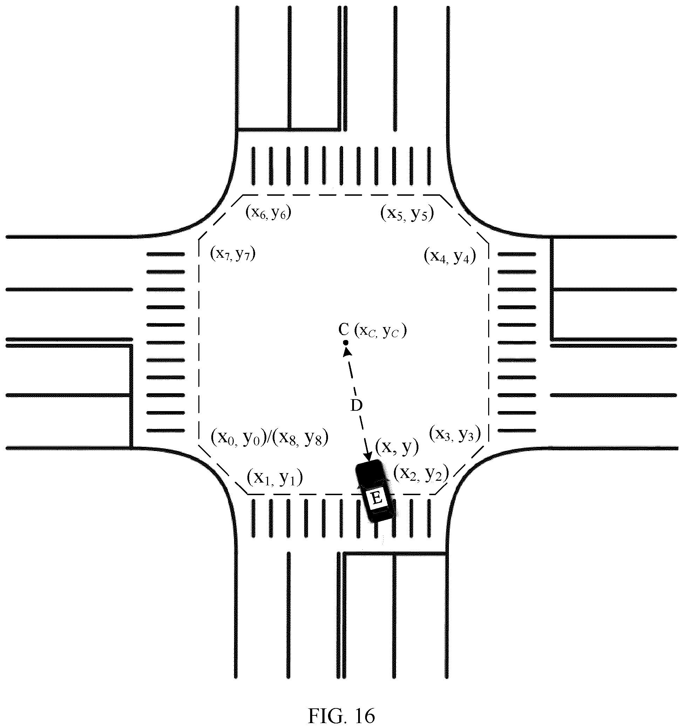

For example, as shown in FIG. 16, the boundary of the target intersection is a multipolygon including N vertices $(x_i, y_i)$, where i is an integer less than N. A location $(x_C, y_C)$ of the center point C of the target intersection is:

$$\mathrm{x}_C = \frac{1}{6A} \sum_{i=0}^{N-1} (\mathrm{x}_i + \mathrm{x}_{i+1})(\mathrm{x}_i\, y_{i+1} - \mathrm{x}_{i+1}\, y_i) \quad \text{Formula 7}$$

$$\mathrm{x}_C = \frac{1}{6A} \sum_{i=0}^{N-1} (y_i + y_{i+1})(\mathrm{x}_i\, y_{i+1} - \mathrm{x}_{i+1}\, y_i) \quad \text{Formula 8}$$

$$A = \frac{1}{2} \sum\nolimits_{i=0}^{N-1} (x_i \, y_{i+1} - x_{i+1} \, y_i), \text{ and when i = N - 1, } \; x_N = x_0 \; \text{ and } \; y_N = y_0.$$

Assuming that coordinates of the target vehicle are (x, y), the distance D between the target vehicle and the center point of the target intersection is:

$$D = \sqrt{(x - x_C)^2 + (y - y_C)^2} \quad \text{Formula 9}$$

Therefore, the association probability K corresponding to the driving exit K is:

$$P(z_K) = f(l, \theta, D) \quad \text{Formula 10}$$

$P(z_K)$ represents the association probability K corresponding to the driving exit K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection.

The association probability K indicates an association between the target vehicle and the reference lane K. A shorter transverse distance $l$ between the target vehicle and the reference lane K or a smaller relative angle $\theta$ between the target vehicle and the reference lane K indicates a higher association. Otherwise, a longer transverse distance $l$ between the target vehicle and the reference lane K or a larger relative angle $\theta$ between the target vehicle and the reference lane K indicates a lower association.

In this embodiment of this application, a calculation method of the function $f$ for calculating an association probability is not limited. For example, the association probability may be obtained in a machine learning method, or may be obtained in a method of assuming that a density function obeys Gaussian distribution.

For example, the function $f$ may be a two-dimensional Gaussian distribution function that obeys the transverse distance $l$ and the relative angle $\theta$, that is, $P = N(\mu_l, \mu_\theta, \delta_l, \delta_\theta)$. N represents a Gaussian function, and all $\mu_l$, $\mu_\theta$, $\delta_l$, and $\delta_\theta$ are values obtained by using a statistical method. For example, statistics on $\mu_l$, $\mu_\theta$, $\delta_l$, and $\delta_\theta$ may be collected offline. The reference lanes at the target intersection and the actual tracks of all the vehicles that pass through the target intersection in a period of time may be obtained in advance, to obtain transverse distances $l$ between the vehicles and the reference lanes or relative angles $\theta$ between the vehicles and the reference lanes. An average value $\mu_l$ of the horizontal distances corresponding to the vehicles is obtained, a variance $\delta_l$ of the horizontal distances corresponding to the vehicles is obtained, an average value $\mu_\theta$ of the relative angles $\theta$ corresponding to the vehicles is obtained, and a variance $\delta_\theta$ of the relative angles $\theta$ corresponding to the vehicles is obtained.

Further, the variance $\delta_l$ and the variance $\delta_\theta$ may be positively correlated to the distance D between the target vehicle and the center point of the target intersection, that is, $P = N(, \mu_l, \mu_\theta, \delta_l(D), \delta_\theta(D))$. Specific reasons are as follows.

The target vehicle has different degrees of driving freedom at different locations at the target intersection. Therefore, the reference lane has different constraints on the target vehicle. For example, if the target vehicle is closer to the driving entrance or the driving exit (that is, farther away from the center point of the target intersection) at the driving entrance or exit, the target vehicle is more likely to be close to the reference lane. If the target vehicle is closer to the center point of the target intersection, the target vehicle is more likely to be far away from the reference lane. Therefore, a transmit probability may be adjusted based on the distance D between the target vehicle and the center point of the target intersection.

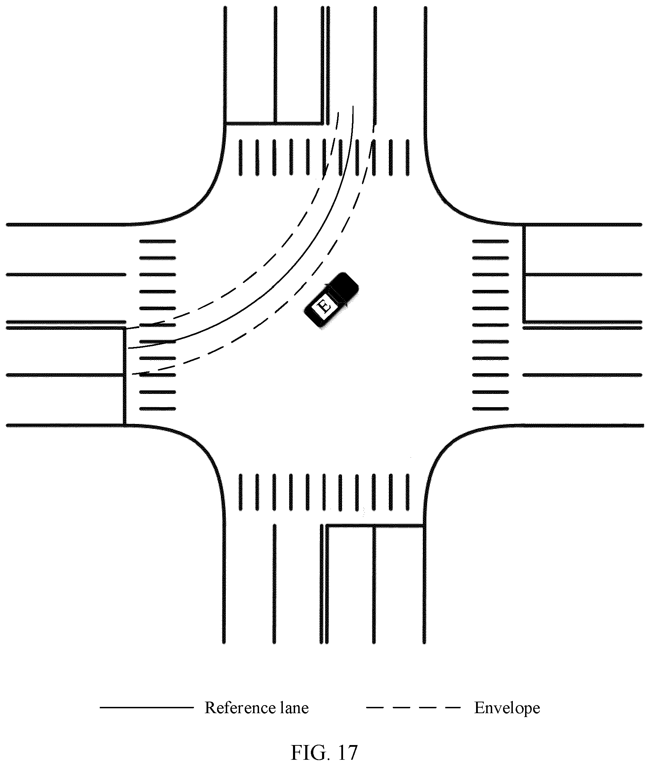

For example, FIG. 17 is a schematic diagram of a relatively strict (that is, a one-fold variance $\delta_l$ and unrelated to the distance D) transmit probability. A solid line is the reference lane, and a dashed line is an envelope (equivalent to a transmit probability threshold) whose horizontal distance from the reference lane is one-fold variance $\delta_l$. If the target vehicle is within the envelope, it indicates that the association between the target vehicle and the reference lane is within the transmit probability threshold, that is, the target vehicle is associated with the reference lane. Otherwise, the target vehicle and the reference lane are not associated. It can be seen from the figure that when the transmit probability is relatively strict, the association between the reference lane and the target vehicle near the center point of the target intersection is low, and even the target vehicle cannot be associated with the reference lane.

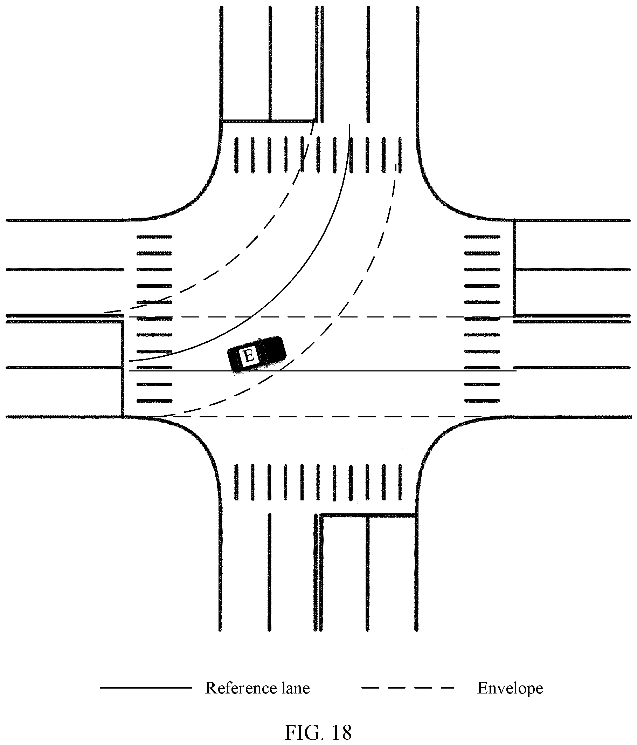

For example, FIG. 18 is a schematic diagram of a relatively loose (that is, a two-fold variance $2\delta_l$ and unrelated to the distance D) transmit probability. A solid line is the reference lane, and a dashed line is an envelope (equivalent to a transmit probability threshold) whose horizontal distance from the reference lane is two-fold variance $2\delta_l$. It can be seen from the figure that when the transmit probability is relatively loose, the target vehicle is associated with a plurality of reference lanes near the center point of the target intersection, that is, the target vehicle cannot distinguish the reference lanes.

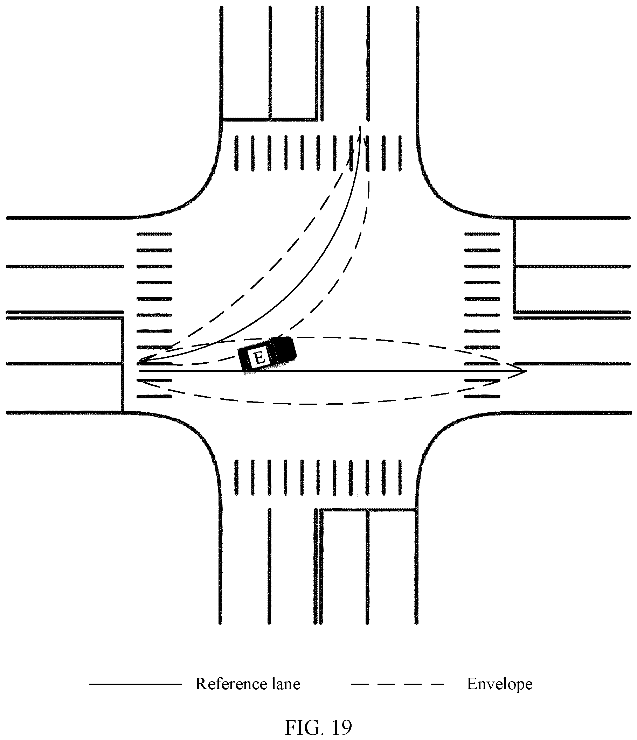

For example, FIG. 19 is a schematic diagram of a transmit probability in Gaussian distribution (that is, a variance $\delta_l$ and unrelated to the distance D). A solid line is the reference lane, and a dashed line is an envelope whose variance is $\delta_l$. A distance between the envelope of the reference lane and the reference lane is shorter when the reference lane is farther away from the center point of the target intersection, and is longer when the reference lane is closer to the center point of the target intersection. In this way, the target vehicle can be correctly associated with the reference lane.

S404: Obtain a driving exit corresponding to a largest likelihood in the N driving exits as a driving exit of the target vehicle.

For example, for a driving exit 1, a driving exit 2, and a driving exit 3 in FIG. 13, the driving exit 1 is with the largest likelihood, and the driving exit 1 may be used as the driving exit of the target vehicle.

Optionally, a driving exit corresponding to a largest posterior probability in the N driving exits as a driving exit of the target vehicle.

For example, for a driving exit 1, a driving exit 2, and a driving exit 3 in FIG. 13, the driving exit 1 is with the largest posterior probability, and the driving exit 1 may be used as the driving exit of the target vehicle.

Further, the driving intention of the target vehicle may be obtained based on the driving exit of the target vehicle.

For example, in FIG. 13, a driving intention corresponding to a driving exit 1 is going straight, a driving intention corresponding to a driving exit 2 is turning left, and a driving intention corresponding to a driving exit 3 is turning right. Therefore, it may be determined that the driving intention of the target vehicle is going straight.

After the driving intention of the target vehicle is determined, the driving intention of the target vehicle may further be displayed on the display.

For example, as shown in FIG. 9 to FIG. 12, the driving intention of the target vehicle may be displayed in arrows or the like.

For the target vehicle that is determined, based on the driving intention of the target vehicle, to travel opposite to the host vehicle or has a risk of collision with the host vehicle, a reminder may be emphasized in a manner of annotating a warning color, blinking annotation information, increasing a blinking frequency of the annotation information, or the like.

For the target vehicle that is determined, based on the driving intention of the target vehicle, to travel with the host vehicle or without a risk of collision with the host vehicle, a reminder may be weakened in a manner of annotating a non-warning color, not displaying annotation information, reducing a blinking frequency of the annotation information, or the like, so that the display is simpler and clearer.

In addition, a prompt tone may be further played by using a loudspeaker, to prompt the driving intention of the target vehicle. For example, "There is a vehicle turning left in front of the right, and please pay attention to avoidance" is played.

According to the vehicle driving exit prediction method provided in this embodiment of this application, the first location of the target vehicle at the target intersection and the driving direction of the target vehicle are obtained; the N reference points respectively associated with the N driving exits of the target intersection are obtained, where N is a positive integer; the likelihoods corresponding to the N driving exits respectively are obtained based on the first location, the driving direction of the target vehicle, and the N reference points, where the likelihood indicates the probability that the target vehicle travels out of the target intersection from the corresponding driving exit; and the driving exit corresponding to the largest likelihood in the N driving exits is obtained as the driving exit of the target vehicle. A likelihood that the target vehicle travels out of each driving exit is calculated to determine that the target vehicle travels out of a driving exit with a largest likelihood. This implements prediction of the driving exit of the target vehicle at the target intersection.

An embodiment of this application further provides a vehicle driving exit prediction apparatus. The vehicle driving exit prediction apparatus is configured to implement the foregoing method. The vehicle driving exit prediction apparatus may be an unmanned aerial vehicle, a vehicle, an electric vehicle, or a hardware apparatus thereof.

It can be understood that, to implement the foregoing functions, the vehicle driving exit prediction apparatus includes a corresponding hardware structure and/or software module for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the vehicle driving exit prediction apparatus may be divided into function modules based on the foregoing method embodiment. For example, each function module may be obtained through division based on each corresponding function, or two or more functions may be integrated into one processing module. The integrated module may be implemented in a form of hardware, or may be implemented in a form of a software function module. It should be noted that, in this embodiment of this application, division into the modules is an example, and is merely a logical function division. In actual implementation, another division manner may be used.

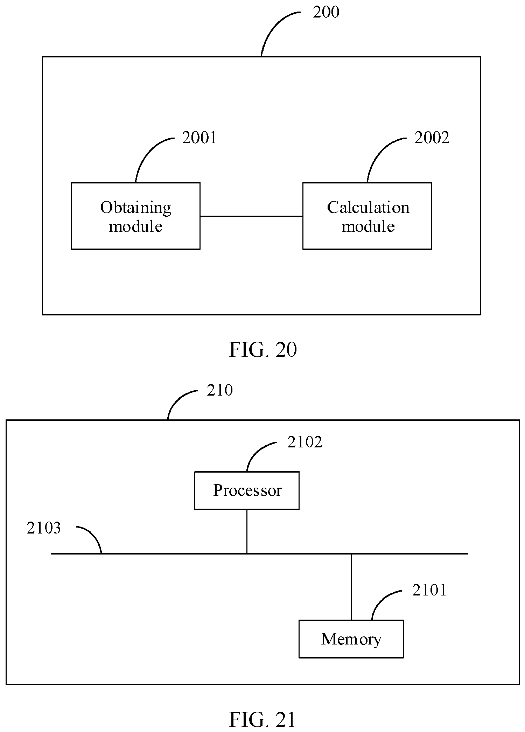

FIG. 20 is a schematic structural diagram of a vehicle driving exit prediction apparatus 200. The vehicle driving exit prediction apparatus 200 includes an obtaining module 2001 and a calculation module 2002. The obtaining module 2001 is configured to implement steps S401 to S404 in FIG. 4, steps S401 to S404 in FIG. 6, and steps S401, S402, S4031, S4032, and S404 in FIG. 8 in the foregoing method embodiment. The calculation module 2002 is configured to implement steps S4033 and S4034 in FIG. 8 in the foregoing method embodiment.

For example, the obtaining module 2001 is configured to obtain a first location of a target vehicle at a target intersection and a driving direction of the target vehicle. The obtaining module 2001 is further configured to obtain N reference points respectively associated with N driving exits of the target intersection. N is a positive integer. The obtaining module 2001 is further configured to obtain, based on the first location, the driving direction of the target vehicle, and the N reference points, likelihoods corresponding to the N driving exits respectively. The likelihood indicates a probability that the target vehicle travels out of the target intersection from a corresponding driving exit. For a driving exit K, the driving exit K indicates a K$^{th}$ driving exit in the N driving exits, K is a positive integer less than or equal to N, and a likelihood K corresponding to the driving exit K is obtained in the following method: The obtaining module 2001 is further configured to generate a predicted track K with reference to the driving direction of the target vehicle by using the first location as a start point and a reference point K associated with the driving exit K as an end point. The obtaining module 2001 is further configured to obtain, based on the first location and a second location, a track point K that is on the predicted track K and that corresponds to the second location. The second location is a second location of the target vehicle at the target intersection. The calculation module 2002 is configured to calculate a distance K between the track point K and the second location. The calculation module 2002 is further configured to calculate, based on the distance K, the likelihood K corresponding to the driving exit K. The obtaining module 2001 is further configured to obtain a driving exit corresponding to a largest likelihood in the N driving exits as a driving exit of the target vehicle.

In a possible implementation, that the obtaining module 2001 calculates, based on the distance K, the likelihood

$$p = \int_{l-\delta}^{l+\delta} \frac{1}{\sqrt{2\pi}\delta} e^{-\frac{(l-\mu)^2}{2\delta^2}} dl$$

K corresponding to the driving exit K includes: , where $l$ represents the distance K, $p$ represents the likelihood K, and both $\mu$ and $\delta$ are values obtained by using a statistical method.

In a possible implementation, the calculation module 2002 is further configured to: before the obtaining module 2001 calculates, based on the distance K, the likelihood K corresponding to the driving exit K, calculate an included angle K between a tangent direction of the track point and the driving direction of the target vehicle; and that the obtaining module 2001 calculates, based on the distance K, the likelihood K corresponding to the driving exit K includes: calculating, based on the distance K and the included angle K, the likelihood K corresponding to the driving exit K.

In a possible implementation, that the calculation module 2002 calculates, based on the distance K and the included angle K, the likelihood K corresponding to the driving exit K includes:

$$P^K = \int_{l-\delta_1}^{l+\delta_1} \frac{1}{\sqrt{2\pi}\delta_1} e^{-\frac{(l-\mu_1)^2}{2\delta_1^2}} dl \int_{\theta-\delta_2}^{\theta+\delta_2} \frac{1}{\sqrt{2\pi}\delta_2} e^{-\frac{(\theta-\mu_2)^2}{2\delta_2^2}} d\theta$$

, where $l$ represents the distance K, $\theta$ represents the included angle K, $P^K$ represents the likelihood K, and all $\mu_1$, $\delta_1$, $\mu_2$, and $\delta_2$ are values obtained by using a statistical method.

In a possible implementation, after calculating, based on the distance K, the likelihood K corresponding to the driving exit K, the calculation module 2002 is further configured to calculate, based on the likelihood K and historical posterior probabilities corresponding to the N driving exits respectively, a posterior probability K corresponding to the driving exit K, where the historical posterior probability indicates a posterior probability that corresponds to a driving exit and that is obtained through previous calculation; and that the obtaining module 2001 obtains the driving exit corresponding to the largest likelihood in the N driving exits as the driving exit of the target vehicle includes: obtaining a driving exit corresponding to a largest posterior probability in the N driving exits as the driving exit of the target vehicle.

In a possible implementation, that the calculation module 2002 calculates, based on the likelihood K and the historical posterior probabilities corresponding to the N driving exits respectively, the posterior probability K corresponding to the driving exit K includes: predicting an intermediate probability K based on the historical posterior probabilities corresponding to the N driving exits respectively; and updating the intermediate probability K based on the likelihood K and an association probability K corresponding to the driving exit K to obtain the posterior probability K.

In a possible implementation, that the calculation module 2002 predicts the intermediate probability K based on the historical posterior probabilities corresponding to the N driving exits respectively includes:

$$P(\overline{x}_t^K) = \eta \sum_{j=1}^{N} P(x_t^K \mid x_{t-1}^j) P(x_{t-1}^j)$$

, where $x$ represents an event that the target vehicle selects a driving exit, t represents a moment corresponding to the second location, t-1 represents a moment corresponding to the first location, j represents a jth driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the jth driving exit to t when the target vehicle selects the driving exit K, and $P(x_{t-1}^j)$ represents a posterior probability corresponding to the jth driving exit at t-1; and that the calculation module 2002 updates the intermediate probability K based on the likelihood K and the association probability K corresponding to the driving exit K to obtain the posterior probability K includes: $P(x_t^K) = P_t^K P(z_K) P(\overline{x}_t^K)$ , where $P(x_t^K)$ represents the posterior probability K, $P_t^K$ represents the likelihood K, $P(z_K)$ represents the association probability K, and $P(\overline{x}_t^K)$ represents the intermediate probability K.

In a possible implementation, before updating the intermediate probability K based on the likelihood K and the association probability K corresponding to the driving exit K to obtain the posterior probability K, the calculation module 2002 is further configured to: calculate the association probability K by using the following formula: $P(z_K) = \dfrac{1}{N}$ , where $P(z_K)$ represents the association probability K, and N represents a quantity of the N N driving exits.

In a possible implementation, that the obtaining module 2001 obtains the N reference points respectively associated with the N driving exits of the target intersection includes: obtaining a location point at each of the N driving exits as a reference point associated with the driving exit.

In a possible implementation, that the obtaining module 2001 obtains the N reference points respectively associated with the N driving exits of the target intersection includes: obtaining N reference lanes from a target driving entrance to the N driving exits, where the target driving entrance is a driving entrance through which the target vehicle travels into the target intersection; and obtaining a location point at each of the N reference lanes as a reference point associated with a driving exit corresponding to the reference lane.

In a possible implementation, that the obtaining module 2001 obtains the location point at each of the N reference lanes as the reference point associated with the driving exit corresponding to each reference lane includes: for any reference lane H in the N reference lanes, obtaining a lane center point sequence H of the reference lane H, and selecting a point in the lane center point sequence H as a reference point associated with a driving exit corresponding to the reference lane H.

In a possible implementation, that the obtaining module 2001 obtains the N reference lanes from the target driving entrance to the N driving exits includes: obtaining the N reference lanes from prior reference lanes of map data; or obtaining the N reference lanes based on dynamic reference lanes that are from the target driving entrance to the N driving exits and that are generated based on a vehicle flow at the target intersection; or generating, based on a vehicle flow at the target intersection, dynamic reference lanes from the target driving entrance to the N driving exits, obtaining prior reference lanes of map data, and correcting the prior reference lanes by using the dynamic reference lanes, to obtain the N reference lanes.

In a possible implementation, before the calculation module 2002 updates the intermediate probability K based on the likelihood K and the association probability K corresponding to the driving exit K to obtain the posterior probability K, the obtaining module 2001 is further configured to: obtain the association probability K based on a transverse distance between the target vehicle and a reference lane K, a relative angle between the target vehicle and the reference lane K, and a distance between the target vehicle and a center point of the target intersection, where the reference lane K is a reference lane from the target entrance to the driving exit K.

In a possible implementation, that the obtaining module 2001 obtains the association probability K based on the transverse distance between the target vehicle and the reference lane K, the relative angle between the target vehicle and the reference lane K, and the distance between the target vehicle and the center point of the target intersection includes: $P(z_K) = f(l, \theta, D)$, where $P(z_K)$ represents the association probability K corresponding to the driving exit K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection.

In a possible implementation, that the obtaining module 2001 generates the predicted track K with reference to the driving direction of the target vehicle by using the first location as a start point and the reference point K associated with the driving exit K as an end point includes: generating the predicted track K based on a Bezier curve with reference to the driving direction of the target vehicle by using the first location as a start point and the reference point K associated with the driving exit K as an end point.

In this embodiment, the vehicle driving exit prediction apparatus 200 is presented in a form of function modules obtained through integration. The "module" herein may be a digital signal processor (digital signal processor, DSP), an application-specific integrated circuit (application specific integrated circuit, ASIC), a circuit, a processor and a memory for executing one or more software or firmware programs, an integrated logic circuit, and/or another component that can provide the foregoing functions.

Because the vehicle driving exit prediction apparatus 200 provided in this embodiment may perform the foregoing method, for a technical effect that can be achieved by the vehicle driving exit prediction apparatus 200, refer to the foregoing method embodiment. Details are not described herein again.

As shown in FIG. 21, an embodiment of this application further provides a vehicle driving exit prediction apparatus. The vehicle driving exit prediction apparatus 210 includes a processor 2102 and a memory 2101. The processor 2102 is coupled to the memory 2101 through a bus 2103. The memory 2101 stores computer instructions. When executing the computer instructions in the memory 2101, the processor 2102 performs the vehicle driving exit prediction method in FIG. 4, FIG. 6, and FIG. 8.

An embodiment of this application further provides a chip. The chip includes a processor and an interface, and is configured to invoke, from a memory, and run computer programs stored in the memory, to perform the vehicle driving exit prediction method in FIG. 4, FIG. 6, and FIG. 8.

An embodiment of this application further provides a computer-readable storage medium. The computer-readable storage medium stores instructions. When the instructions in the computer-readable storage medium are run on a computer or a processor, the computer or the processor is enabled to perform the vehicle driving exit prediction method in FIG. 4, FIG. 6, and FIG. 8.

An embodiment of this application further provides a computer program product including instructions. When the instructions are run on a computer or a processor, the computer or the processor is enabled to perform the vehicle driving exit prediction method in FIG. 4, FIG. 6, and FIG. 8.

An embodiment of this application provides a chip system. The chip system includes a processor, configured to perform the vehicle driving exit prediction method in FIG. 4, FIG. 6, and FIG. 8 by a vehicle driving exit prediction apparatus.

In a possible design, the chip system further includes a memory. The memory is configured to store necessary program instructions and necessary data. The chip system may include a chip and an integrated circuit, or may include a chip and another discrete device. This is not specifically limited in this embodiment of this application.

The vehicle driving exit prediction apparatus, the chip, the computer storage medium, the computer program product, or the chip system provided in this application is configured to perform the method provided above. Therefore, for beneficial effects that can be achieved, refer to the beneficial effects in the implementations provided above. Details are not described herein again.

The processor in the embodiments of this application may be a chip. For example, the processor may be a field programmable gate array (field programmable gate array, FPGA), may be an application-specific integrated chip (application specific integrated circuit, ASIC), may be a system on chip (system on chip, SoC), may be a central processor unit (central processor unit, CPU), may be a network processor (network processor, NP), may be a digital signal processing circuit (digital signal processor, DSP), may be a micro controller (micro controller unit, MCU), or may be a programmable controller (programmable logic device, PLD), or another integrated chip.

The memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another appropriate type.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A vehicle driving exit prediction method, comprising:

   obtaining a first location of a target vehicle at a target intersection and a driving direction of the target vehicle;
   obtaining N reference points respectively associated with N driving exits of the target intersection, wherein N is a positive integer;
   obtaining, based on the first location, the driving direction of the target vehicle, and the N reference points, likelihoods respectively corresponding to the N driving exits, wherein a likelihood indicates a probability that the target vehicle travels out of the target intersection from a corresponding driving exit, wherein
   for a driving exit K, the driving exit K indicates a $K^{th}$ driving exit in the N driving exits, K is a positive integer less than or equal to N, and a likelihood K corresponding to the driving exit K is obtained in the following method:

   generating a predicted track K with reference to the driving direction of the target vehicle by using the first location as a start point and a reference point K associated with the driving exit K as an end point;
   obtaining, based on the first location and a second location, a track point K that is on the predicted track K and that corresponds to the second location, wherein the second location is a second location of the target vehicle at the target intersection;

calculating a distance K between the track point K and the second location; and
calculating the likelihood K based on the distance K; and
obtaining a driving exit corresponding to a largest likelihood in the N driving exits as a driving exit of the target vehicle.

2. The method according to claim 1, wherein the calculating, based on the distance K, the likelihood K corresponding to the driving exit K comprises:

$$ p = \int_{l-\delta}^{l+\delta} \frac{1}{\sqrt{2\pi}\delta} e^{-\frac{(l-\mu)^2}{2\delta^2}} dl , $$

wherein $l$ represents the distance K, $p$ represents the likelihood K, and both $\mu$ and $\delta$ are values obtained by using a statistical method.

3. The method according to claim 1 or 2, wherein before the calculating, based on the distance K, the likelihood K corresponding to the driving exit K, the method further comprises:

calculating an included angle K between a tangent direction of the track point and the driving direction of the target vehicle; and
the calculating, based on the distance K, the likelihood K corresponding to the driving exit K comprises: calculating, based on the distance K and the included angle K, the likelihood K corresponding to the driving exit K.

4. The method according to claim 3, wherein the calculating, based on the distance K and the included angle K, the likelihood K corresponding to the driving exit K comprises:

$$ P^K = \int_{l-\delta_1}^{l+\delta_1} \frac{1}{\sqrt{2\pi}\delta_1} e^{-\frac{(l-\mu_1)^2}{2\delta_1^2}} dl \int_{\theta-\delta_2}^{\theta+\delta_2} \frac{1}{\sqrt{2\pi}\delta_2} e^{-\frac{(\theta-\mu_2)^2}{2\delta_2^2}} d\theta , $$

wherein $l$ represents the distance K, $\theta$ represents the included angle K, $P^K$ represents the likelihood K, and all $\mu_1$, $\delta_1$, $\mu_2$, and $\delta_2$ are values obtained by using a statistical method.

5. The method according to any one of claims 1 to 4, wherein after the calculating, based on the distance K, the likelihood K corresponding to the driving exit K, the method further comprises:

calculating, based on the likelihood K and historical posterior probabilities corresponding to the N driving exits respectively, a posterior probability K corresponding to the driving exit K, wherein the historical posterior probability indicates a posterior probability that corresponds to a driving exit and that is obtained through previous calculation; and
the obtaining a driving exit corresponding to a largest likelihood in the N driving exits as a driving exit of the target vehicle comprises:
obtaining a driving exit corresponding to a largest posterior probability in the N driving exits as the driving exit of the target vehicle.

6. The method according to claim 5, wherein the calculating, based on the likelihood K and historical posterior probabilities corresponding to the N driving exits respectively, a posterior probability K corresponding to the driving exit K comprises:

predicting an intermediate probability K based on the historical posterior probabilities corresponding to the N driving exits respectively; and
updating the intermediate probability K based on the likelihood K and an association probability K corresponding to the driving exit K to obtain the posterior probability K.

7. The method according to claim 6, wherein the predicting an intermediate probability K based on the historical posterior probabilities corresponding to the N driving exits respectively comprises:

$$P(\overline{x}_t^K) = \eta \sum_{j=1}^{N} P(x_t^K \mid x_{t-1}^j) P(x_{t-1}^j),$$

wherein

$\chi$ represents an event that the target vehicle selects a driving exit, t represents a moment corresponding to the second location, t-1 represents a moment corresponding to the first location, j represents a jth driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the jth driving exit to t when the target vehicle selects the driving exit K, and $P(x_{t-1}^j)$ represents a posterior probability corresponding to the jth driving exit at t-1; and
the updating the intermediate probability K based on the likelihood K and an association probability K corresponding to the driving exit K to obtain the posterior probability K comprises:

$$P(x_t^K) = P_t^K P(z_K) P(\overline{x}_t^K),$$

wherein

$P(x_t^K)$ represents the posterior probability K, $P_t^K$ represents the likelihood K, $P(z_K)$ represents the association probability K, and $P(\overline{x}_t^K)$ represents the intermediate probability K.

8. The method according to claim 7, wherein before the updating the intermediate probability K based on the likelihood K and an association probability K corresponding to the driving exit K to obtain the posterior probability K, the method further comprises:
calculating the association probability K by using the following formula:

$$P(z_K) = \frac{1}{N},$$

wherein
$P(z_K)$ represents the association probability K, and N represents a quantity of the N driving exits.

9. The method according to claim 8, wherein the obtaining N reference points respectively associated with N driving exits of the target intersection comprises:
obtaining a location point at each of the N driving exits as a reference point associated with the driving exit.

10. The method according to claim 7, wherein the obtaining N reference points respectively associated with N driving exits of the target intersection comprises:

obtaining N reference lanes from a target driving entrance to the N driving exits, wherein the target driving entrance is a driving entrance through which the target vehicle travels into the target intersection; and
obtaining a location point at each of the N reference lanes as a reference point associated with a driving exit corresponding to the reference lane.

11. The method according to claim 10, wherein the obtaining a location point at each of the N reference lanes as a reference point associated with a driving exit corresponding to the reference lane comprises:
for any reference lane H in the N reference lanes, obtaining a lane center point sequence H of the reference lane H, and selecting a point in the lane center point sequence H as a reference point associated with a driving exit corresponding to the reference lane H.

12. The method according to claim 10 or 11, wherein the obtaining N reference lanes from a target driving entrance to the N driving exits comprises:

obtaining the N reference lanes from prior reference lanes of map data; or

obtaining the N reference lanes based on dynamic reference lanes that are from the target driving entrance to the N driving exits and that are generated based on a vehicle flow at the target intersection; or

generating, based on a vehicle flow at the target intersection, dynamic reference lanes from the target driving entrance to the N driving exits,

obtaining prior reference lanes of map data, and

correcting the prior reference lanes by using the dynamic reference lanes, to obtain the N reference lanes.

13. The method according to any one of claims 10 to 12, wherein before the updating the intermediate probability K based on the likelihood K and an association probability K corresponding to the driving exit K to obtain the posterior probability K, the method further comprises:

obtaining the association probability K based on a transverse distance between the target vehicle and a reference lane K, a relative angle between the target vehicle and the reference lane K, and a distance between the target vehicle and a center point of the target intersection, wherein the reference lane K is a reference lane from the target entrance to the driving exit K.

14. The method according to claim 13, wherein the obtaining the association probability K based on a transverse distance between the target vehicle and a reference lane K, a relative angle between the target vehicle and the reference lane K, and a distance between the target vehicle and a center point of the target intersection comprises:

$$P(z_K) = f(l, \theta, D),$$

wherein

$P(z_K)$ represents the association probability K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection.

15. The method according to any one of claims 1 to 14, wherein the generating a predicted track K with reference to the driving direction of the target vehicle by using the first location as a start point and a reference point K associated with the driving exit K as an end point comprises:

generating the predicted track K based on a Bezier curve with reference to the driving direction of the target vehicle by using the first location as a start point and the reference point K associated with the driving exit K as an end point.

16. A vehicle driving exit prediction apparatus, comprising an obtaining module and a calculation module, wherein

the obtaining module is configured to obtain a first location of a target vehicle at a target intersection and a driving direction of the target vehicle;

the obtaining module is further configured to obtain N reference points respectively associated with N driving exits of the target intersection, wherein N is a positive integer;

the obtaining module is further configured to obtain, based on the first location, the driving direction of the target vehicle, and the N reference points, likelihoods respectively corresponding to the N driving exits, wherein a likelihood indicates a probability that the target vehicle travels out of the target intersection from a corresponding driving exit, wherein

for a driving exit K, the driving exit K indicates a Kth driving exit in the N driving exits, K is a positive integer less than or equal to N, and a likelihood K corresponding to the driving exit K is obtained in the following method:

the obtaining module is further configured to generate a predicted track K with reference to the driving direction of the target vehicle by using the first location as a start point and a reference point K associated with the driving exit K as an end point;

the obtaining module is further configured to obtain, based on the first location and a second location, a track point K that is on the predicted track K and that corresponds to the second location, wherein the second location is a second location of the target vehicle at the target intersection;

the calculation module is configured to calculate a distance K between the track point K and the second location; and

the calculation module is further configured to calculate, based on the distance K, the likelihood K corresponding to the driving exit K; and

the obtaining module is further configured to obtain a driving exit corresponding to a largest likelihood in the N driving exits as a driving exit of the target vehicle.

17. The apparatus according to claim 16, wherein that the calculation module calculates, based on the distance K, the likelihood K corresponding to the driving exit K comprises:

$$p = \int_{l-\delta}^{l+\delta} \frac{1}{\sqrt{2\pi}\delta} e^{-\frac{(l-\mu)^2}{2\delta^2}} dl \,,$$

wherein
$l$ represents the distance K, $p$ represents the likelihood K, and both $\mu$ and $\delta$ are values obtained by using a statistical method.

18. The apparatus according to claim 16 or 17, wherein

the calculation module is further configured to: before the calculation module calculates, based on the distance K, the likelihood K corresponding to the driving exit K, calculate an included angle K between a tangent direction of the track point and the driving direction of the target vehicle; and
that the calculation module calculates, based on the distance K, the likelihood K corresponding to the driving exit K comprises:
calculating, based on the distance K and the included angle K, the likelihood K corresponding to the driving exit K.

19. The apparatus according to claim 18, wherein that the calculation module calculates, based on the distance K and the included angle K, the likelihood K corresponding to the driving exit K comprises:

$$P^K = \int_{l-\delta_1}^{l+\delta_1} \frac{1}{\sqrt{2\pi}\delta_1} e^{-\frac{(l-\mu_1)^2}{2\delta_1^2}} dl \int_{\theta-\delta_2}^{\theta+\delta_2} \frac{1}{\sqrt{2\pi}\delta_2} e^{-\frac{(\theta-\mu_2)^2}{2\delta_2^2}} d\theta \,,$$

wherein
$l$ represents the distance K, $\theta$ represents the included angle K, $P^K$ represents the likelihood K, and all $\mu_1$, $\delta_1$, $\mu_2$, and $\delta_2$ are values obtained by using a statistical method.

20. The apparatus according to any one of claims 16 to 19, wherein

after calculating, based on the distance K, the likelihood K corresponding to the driving exit K, the calculation module is further configured to calculate, based on the likelihood K and historical posterior probabilities corresponding to the N driving exits respectively, a posterior probability K corresponding to the driving exit K, wherein the historical posterior probability indicates a posterior probability that corresponds to a driving exit and that is obtained through previous calculation; and
that the obtaining module obtains the driving exit corresponding to the largest likelihood in the N driving exits as the driving exit of the target vehicle comprises: obtaining a driving exit corresponding to a largest posterior probability in the N driving exits as the driving exit of the target vehicle.

21. The apparatus according to claim 20, wherein that the calculation module calculates, based on the likelihood K and the historical posterior probabilities corresponding to the N driving exits respectively, the posterior probability K corresponding to the driving exit K comprises:

predicting an intermediate probability K based on the historical posterior probabilities corresponding to the N driving exits respectively; and
updating the intermediate probability K based on the likelihood K and an association probability K corresponding to the driving exit K to obtain the posterior probability K.

22. The apparatus according to claim 21, wherein that the calculation module predicts the intermediate probability K based on the historical posterior probabilities corresponding to the N driving exits respectively comprises:

$$P(\overline{x}_t^K) = \eta \sum\nolimits_{j=1}^N P(x_t^K \mid x_{t-1}^j) P(x_{t-1}^j)$$

wherein

$\chi$ represents an event that the target vehicle selects a driving exit, t represents a moment corresponding to the second location, t-1 represents a moment corresponding to the first location, j represents a j$^{\text{th}}$ driving exit in the N driving exits, $P(\overline{x}_t^K)$ represents the intermediate probability K, $\eta$ represents a normalization coefficient, $P(x_t^K \mid x_{t-1}^j)$ represents a first state transition probability from t-1 when the target vehicle selects the j$^{\text{th}}$ driving exit to t when the target vehicle selects the driving exit K, and $P(x_{t-1}^j)$ represents a posterior probability corresponding to the j$^{\text{th}}$ driving exit at t-1; and

that the calculation module updates the intermediate probability K based on the likelihood K and the association probability K corresponding to the driving exit K to obtain the posterior probability K comprises:

$$P(x_t^K) = P_t^K P(z_K) P(\overline{x}_t^K),$$

wherein

$P(x_t^K)$ represents the posterior probability K, $P_t^K$ represents the likelihood K, $P(z_K)$ represents the association probability K, and $P(\overline{x}_t^K)$ represents the intermediate probability K.

23. The apparatus according to claim 22, wherein before updating the intermediate probability K based on the likelihood K and the association probability K corresponding to the driving exit K to obtain the posterior probability K, the calculation module is further configured to:
calculate the association probability K by using the following formula:

$$P(z_K) = \frac{1}{N},$$

wherein
P($z_K$) represents the association probability K, and N represents a quantity of the N driving exits.

24. The apparatus according to claim 23, wherein that the obtaining module obtains the N reference points respectively associated with the N driving exits of the target intersection comprises:
obtaining a location point at each of the N driving exits as a reference point associated with the driving exit.

25. The apparatus according to claim 22, wherein that the obtaining module obtains the N reference points respectively associated with the N driving exits of the target intersection comprises:

obtaining N reference lanes from a target driving entrance to the N driving exits, wherein the target driving entrance is a driving entrance through which the target vehicle travels into the target intersection; and
obtaining a location point at each of the N reference lanes as a reference point associated with a driving exit corresponding to the reference lane.

26. The apparatus according to claim 25, wherein that the obtaining module obtains the location point at each of the N reference lanes as the reference point associated with the driving exit corresponding to each reference lane comprises:
for any reference lane H in the N reference lanes, obtaining a lane center point sequence H of the reference lane H, and selecting a point in the lane center point sequence H as a reference point associated with a driving exit corresponding to the reference lane H.

27. The apparatus according to claim 25 or 26, wherein that the obtaining module obtains the N reference lanes from the target driving entrance to the N driving exits comprises:

obtaining the N reference lanes from prior reference lanes of map data; or
obtaining the N reference lanes based on dynamic reference lanes that are from the target driving entrance to the N driving exits and that are generated based on a vehicle flow at the target intersection; or
generating, based on a vehicle flow at the target intersection, dynamic reference lanes from the target driving entrance to the N driving exits,
obtaining prior reference lanes of map data, and
correcting the prior reference lanes by using the dynamic reference lanes, to obtain the N reference lanes.

28. The apparatus according to any one of claims 25 to 27, wherein before the calculation module updates the intermediate probability K based on the likelihood K and the association probability K corresponding to the driving exit K to obtain the posterior probability K, the obtaining module is further configured to:
obtain the association probability K based on a transverse distance between the target vehicle and a reference lane K, a relative angle between the target vehicle and the reference lane K, and a distance between the target vehicle and a center point of the target intersection, wherein the reference lane K is a reference lane from the target entrance to the driving exit K.

29. The apparatus according to claim 28, wherein that the obtaining module obtains the association probability K based on the transverse distance between the target vehicle and the reference lane K, the relative angle between the target vehicle and the reference lane K, and the distance between the target vehicle and the center point of the target intersection comprises:

$$P(z_K) = f(l, \theta, D),$$

wherein
$P(z_K)$ represents the association probability K, $f$ represents a function, $l$ represents the transverse distance between the target vehicle and the reference lane K, $\theta$ represents the relative angle between the target vehicle and the reference lane K, and D represents the distance between the target vehicle and the center point of the target intersection.

30. The apparatus according to any one of claims 16 to 29, wherein that the obtaining module generates the predicted track K with reference to the driving direction of the target vehicle by using the first location as a start point and the reference point K associated with the driving exit K as an end point comprises:
generating the predicted track K based on a Bezier curve with reference to the driving direction of the target vehicle by using the first location as a start point and the reference point K associated with the driving exit K as an end point.

31. A vehicle driving exit prediction apparatus, comprising a processor and a memory, wherein the memory stores computer instructions, and the processor executes the computer instructions to perform the vehicle driving exit prediction method according to any one of claims 1 to 15.

32. A computer-readable storage medium, wherein the computer-readable storage medium stores computer instructions, and when the computer instructions in the computer-readable storage medium are run on a computer or a processor, the computer or the processor is enabled to perform the vehicle driving exit prediction method according to any one of claims 1 to 15.

FIG. 1

Vehicle 100

| Travel system 110 | Sensor system 120 | Control system 130 | Peripheral device 140 |
|---|---|---|---|
| Engine 111 | Positioning system 121 | Steering system 131 | Wireless communications system 141 |
| Energy source 112 | Inertial measurement unit 122 | Accelerometer 132 | Touch display 142 |
| Transmission apparatus 113 | Radar 123 | Brake unit 133 | Microphone 143 |
| Wheel 114 | Laser rangefinder 124 | Computer vision system 134 | Loudspeaker 144 |
| | Camera 125 | Route control system 135 | |
| | | Obstacle avoidance system 136 | |

Processor 161

Instructions 163

Data storage apparatus 162

Computer system 160

Power supply 150

User interface 170

FIG. 2

Processor 161

31

32

Sense module → Fusion module

33

Prediction module

Location information    Map

FIG. 3

Obtain a first location of a target vehicle at a target intersection and a driving direction of the target vehicle    S401

Obtain N reference points respectively associated with N driving exits of the target intersection    S402

Obtain, based on the first location, the driving direction of the target vehicle, and the N reference points, likelihoods corresponding to the N driving exits respectively    S403

Obtain a driving exit corresponding to a largest likelihood in the N driving exits as a driving exit of the target vehicle    S404

FIG. 4

● Reference point      ——▶ Predicted track

FIG. 5

Obtain a first location of a target vehicle at a target intersection and a driving direction of the target vehicle    S401

Obtain N reference lanes from a target driving entrance to the N driving exits    S4021

Obtain a location point at each of the N reference lanes as a reference point associated with a driving exit corresponding to the reference lane    S4022

Obtain, based on the first location, the driving direction of the target vehicle, and the N reference points, likelihoods corresponding to the N driving exits respectively    S403

Obtain a driving exit corresponding to a largest likelihood in the N driving exits as a driving exit of the target vehicle    S404

FIG. 6

Driving
entrances

Driving
exits

B

Driving
exits

C

Driving
entrances

E

A

Driving
entrances

Driving
exits

Driving
exits

Driving
entrances

——— Reference
lane K

○ Lane center point
sequence H

● Reference
point

FIG. 7

Obtain a first location of a target vehicle at a target intersection and a driving direction of the target vehicle — S401

Obtain N reference points respectively associated with N driving exits of the target intersection — S402

Generate a predicted track K with reference to the driving direction of the target vehicle by using the first location as a start point and a reference point K associated with a driving exit K as an end point — S4031

Obtain, based on the first location and a second location, a track point K that is on the predicted track K and that corresponds to the second location — S4032

Calculate a distance K between the track point K and the second location — S4033

Calculate, based on the distance K, a likelihood K corresponding to the driving exit K — S4034

Obtain a driving exit corresponding to a largest likelihood in the N driving exits as a driving exit of the target vehicle — S404

FIG. 8

Driving
entrances

Driving
exits

B1

Driving
exits

Driving
entrances

A

IE

Driving
entrances

B2

Driving
exits

E

Driving
exits

Driving
entrances

———— Reference
lane

○ Reference
point

Host
vehicle

Target
vehicle

— — — Predicted
track

FIG. 9

FIG. 10

———— Reference lane          ○ Reference point          — — - Predicted track

FIG. 11

● Reference point                                              — — - Predicted track

FIG. 12

Driving exit 1

Go straight

Driving exit 2

Turn left

C1  E1  B
E2
C2  S  S  E3
S  S

A  Turn right

C3  Driving exit 3

• Reference point ———▶ Predicted track ━━━▶ Actual moving track

FIG. 13

Driving
exit 1

Go
straight

Driving
exit 2

Turn left

C1

B

θ3

C2

θ2

θ1

C3

Driving
exit 3

A

Turn
right

• Reference point      → Predicted track      ➡ Actual moving track

——— Tangent line of a track point

FIG. 14

— Reference lane

FIG. 15

FIG. 16

——————— Reference lane  — — — — —  Envelope

FIG. 17

————————— Reference lane      — — — —  Envelope

FIG. 18

———— Reference lane     — — — — Envelope

FIG. 19

200

Obtaining
module
2001

Calculation
module
2002

FIG. 20

210

Processor
2102

2103

Memory
2101

FIG. 21

## INTERNATIONAL SEARCH REPORT

International application No.

**PCT/CN2020/077801**

### A. CLASSIFICATION OF SUBJECT MATTER

G08G 1/01(2006.01)i; B60W 40/00(2006.01)i

According to International Patent Classification (IPC) or to both national classification and IPC

### B. FIELDS SEARCHED

Minimum documentation searched (classification system followed by classification symbols)

G08G; B60W; G01S; G05D; H04W

Documentation searched other than minimum documentation to the extent that such documents are included in the fields searched

Electronic data base consulted during the international search (name of data base and, where practicable, search terms used)

CNABS, VEN, CNTXT, CNKI: 车辆, 行驶, 概率, 似然度, 预测, 预判, 意图, 轨迹, 碰, 撞, 车道, 出口, 驶出, 路口, 道口, 交叉, 轨迹, 距离, 测距, 夹角, 角度, 位置, 后验概率, vehicl, drive, probability, likelihood, forecast, intent, track, collision, crash, driveway, roadway, exit, export, crossing, intersection, distance, angle, position, location, posterior

### C. DOCUMENTS CONSIDERED TO BE RELEVANT

| Category* | Citation of document, with indication, where appropriate, of the relevant passages | Relevant to claim No. |
|---|---|---|
| Y | CN 110789528 A (TENCENT TECHNOLOGY SHENZHEN CO., LTD.) 14 February 2020 (2020-02-14)<br>    description, paragraphs 5-180, figures 1-9 | 1, 16, 31, 32 |
| Y | CN 107710304 A (MITSUBISHI ELECTRIC CORPORATION) 16 February 2018 (2018-02-16)<br>    description, paragraphs 12-162, figures 1-13 | 1, 16, 31, 32 |
| A | CN 110111566 A (TENCENT TECHNOLOGY SHENZHEN CO., LTD.) 09 August 2019 (2019-08-09)<br>    entire document | 1-32 |
| A | CN 109885066 A (HIRAIN TECHNOLOGIES CO., LTD.) 14 June 2019 (2019-06-14)<br>    entire document | 1-32 |
| A | CN 110400490 A (TENCENT TECHNOLOGY SHENZHEN CO., LTD.) 01 November 2019 (2019-11-01)<br>    entire document | 1-32 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 November 2020** | **30 November 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

# EP 4 030 403 A1

**INTERNATIONAL SEARCH REPORT**

International application No.

**PCT/CN2020/077801**

## C.    DOCUMENTS CONSIDERED TO BE RELEVANT

| Category* | Citation of document, with indication, where appropriate, of the relevant passages | Relevant to claim No. |
|---|---|---|
| A | CN 110796858 A (SHANDONG UNIVERSITY OF SCIENCE AND TECHNOLOGY et al.) 14 February 2020 (2020-02-14) entire document | 1-32 |
| A | JP 2010033352 A (TOYOTA CENTRAL RES. & DEV. et al.) 12 February 2010 (2010-02-12) entire document | 1-32 |
| A | JP 2014241036 A (MITSUBISHI ELECTRIC CORP.) 25 December 2014 (2014-12-25) entire document | 1-32 |

Form PCT/ISA/210 (second sheet) (January 2015)

46

**INTERNATIONAL SEARCH REPORT**
Information on patent family members

International application No.

**PCT/CN2020/077801**

| Patent document cited in search report | | | Publication date (day/month/year) | Patent family member(s) | | | Publication date (day/month/year) |
|---|---|---|---|---|---|---|---|
| CN | 110789528 | A | 14 February 2020 | None | | | |
| CN | 107710304 | A | 16 February 2018 | US | 10741079 | B2 | 11 August 2020 |
| | | | | US | 2018182245 | A1 | 28 June 2018 |
| | | | | EP | 3319065 | A1 | 09 May 2018 |
| | | | | JP | WO2017002441 | A1 | 14 September 2017 |
| | | | | EP | 3319065 | A4 | 27 February 2019 |
| | | | | JP | 6272566 | B2 | 31 January 2018 |
| | | | | WO | 2017002258 | A1 | 05 January 2017 |
| | | | | WO | 2017002441 | A1 | 05 January 2017 |
| CN | 110111566 | A | 09 August 2019 | None | | | |
| CN | 109885066 | A | 14 June 2019 | None | | | |
| CN | 110400490 | A | 01 November 2019 | None | | | |
| CN | 110796858 | A | 14 February 2020 | None | | | |
| JP | 2010033352 | A | 12 February 2010 | None | | | |
| JP | 2014241036 | A | 25 December 2014 | None | | | |

Form PCT/ISA/210 (patent family annex) (January 2015)